# EUROPEAN PATENT APPLICATION

(11) **EP 4 807 510 A1**
(43) Date of publication of application: **16.09.2026**
(21) Application number: 24896527.9
(22) Date of filing: 26.11.2024
(51) Int. Cl.: G06F 3/04817, B60W 30/06

(54) **DISPLAY METHOD, VEHICLE, ELECTRONIC DEVICE, AND INTERACTION SYSTEM**

(30) Priority: 27.11.2023 CN 202311604647
(71) Applicant: Yinwang Intelligent Technologies Co., Ltd., Shenzhen, Guangdong 518110 (CN)
(72) Inventor: XU, Ting, Shenzhen, Guangdong 518129 (CN); SHEN, Yujie, Shenzhen, Guangdong 518129 (CN); WANG, Shaolei, Shenzhen, Guangdong 518129 (CN); ZHAO, Tiantian, Shenzhen, Guangdong 518129 (CN); ZHU, Xiaoning, Shenzhen, Guangdong 518129 (CN)
(74) Representative: Gill Jennings & Every LLP
(86) International application number: PCT/CN2024/134553
(87) International publication number: WO 2025/113439

(57) **Abstract**

This application provides a display method, a vehicle, an electronic device, and an interaction system in the vehicle field, to provide a user with a one-stop service that integrates functions such as valet parking, roaming parking, summoning, or vehicle finding, so that the user can select a required function on a same platform, thereby improving user experience. For example, the method includes: displaying a vehicle parking and vehicle finding interface in response to a trigger operation for the vehicle parking and vehicle finding interface, where the vehicle parking and vehicle finding interface includes a plurality of icons, the plurality of icons include at least one of a valet parking icon, a roaming parking icon, a summoning icon, or a vehicle finding icon, a function corresponding to the valet parking icon indicates a function of starting to park a vehicle into a parking space, the roaming parking icon indicates a function of searching for a parking space by the vehicle, the summoning indicates a function of traveling to a specified position by the vehicle, and the vehicle finding indicates a function of obtaining a path to the vehicle.

## Description

This application claims priority to Chinese Patent Application No. 202311604647.0, filed with the China National Intellectual Property Administration on November 27, 2023 and entitled "DISPLAY METHOD, VEHICLE, ELECTRONIC DEVICE, AND INTERACTION SYSTEM", which is incorporated herein by reference in its entirety.

### TECHNICAL FIELD

This application relates to the vehicle field, and in particular, to a display method, a vehicle, an electronic device, and an interaction system.

### BACKGROUND

Generally, it takes a long time for a person to manually find a vacant parking space during parking. After the parking, the person further needs to walk to a final destination. If the person forgets to record a position of a vehicle after the parking, the person cannot find the vehicle for use next time or needs to walk for a long time to find the vehicle. This is time-consuming and labor-consuming. Moreover, manual valet parking still has other risks such as vehicle damage and high costs. In addition, reservation and key handover operations are complex and energy-consuming. Therefore, implementing efficient and convenient vehicle use or vehicle finding becomes an urgent problem to be resolved.

### SUMMARY

This application provides a display method, a vehicle, an electronic device, and an interaction system, to provide a user with a one-stop service that integrates functions such as valet parking, roaming parking, summoning, or vehicle finding, so that the user can select a required function on a same platform, thereby improving user experience.

In view of this, according to a first aspect, this application provides a display method, including: displaying a vehicle parking and vehicle finding interface in response to a trigger operation for the vehicle parking and vehicle finding interface, where the vehicle parking and vehicle finding interface includes a plurality of icons, the plurality of icons include at least one of a valet parking icon, a roaming parking icon, a summoning icon, or a vehicle finding icon, a function corresponding to the valet parking icon indicates a function of starting to park a vehicle into a parking space, the roaming parking icon indicates a function of searching for a parking space by the vehicle, the summoning indicates a function of traveling to a specified position by the vehicle, the vehicle finding indicates a function of obtaining a path to the vehicle, and the parking query indicates a function of querying a position of the vehicle.

Therefore, in this implementation of this application, a plurality of functions are integrated into a same platform, and a user can implement one-click enabling of each function without switching an application, so that the user can more conveniently enable a required function, thereby improving user experience.

In a possible implementation, the method may further include: sending control data to the vehicle in response to an operation on a selected icon in the vehicle parking and vehicle finding interface, where the control data includes an instruction for instructing the vehicle to implement a function corresponding to the selected icon; and displaying a path obtained when the vehicle implements the function corresponding to the selected icon.

Therefore, in this implementation of this application, when selecting an icon, the user may send the control data to the vehicle, to control the vehicle to implement a corresponding function such as a function that needs to be performed by the vehicle, for example, valet parking, roaming parking, or summoning, so as to implement one-click enabling of the function. In addition, when the vehicle executes a corresponding task, a traveling path of the vehicle may be displayed in real time, so that a process of performing each function by the vehicle is transparent, and the user can learn of a vehicle status in real time, thereby improving user experience and improving driving safety of the vehicle.

In a possible implementation, the method may further include: displaying information collected by a sensor in the vehicle when the vehicle implements the function corresponding to the selected icon. In this implementation of this application, information about an environment in which the vehicle is located may be further displayed in real time, so that the user can more comprehensively learn of the environment in which the vehicle is located, thereby improving user experience.

In a possible implementation, if the selected icon includes any one of the valet parking icon, the summoning icon, and the vehicle finding icon, displaying the path obtained when the vehicle implements the function corresponding to the selected icon may include: obtaining information about a first position, where the first position may be a position selected by the user, or may be a default position during function enabling; then obtaining at least one path based on the information about the first position, where the at least one path includes a path between the first position and a second position of the vehicle; and displaying the at least one path. Therefore, in this implementation of this application, a path between the vehicle and a specified position may be generated, to implement functions such as valet parking, summoning, or vehicle finding.

In a possible implementation, if the selected icon is the valet parking icon, the vehicle parking and vehicle finding interface displays at least one available parking space, and the at least one available parking space is an unoccupied parking space; and obtaining the information about the first position may include: obtaining a position of a selected available parking space in response to an operation on any one of the at least one available parking space, to obtain the information about the first position.

Therefore, in this implementation of this application, the available parking space may be displayed in a display interface, and the user may select a parking space for parking, so that the vehicle can be parked at a position required by the user.

In a possible implementation, the method may further include: obtaining data collected by the sensor in the vehicle, and determining the at least one available parking space based on the data collected by the sensor.

Therefore, in this implementation of this application, a distribution status of available parking spaces may be obtained based on the data collected by the sensor in the vehicle, without depending on external data, so that the auto valet parking function of the vehicle can adapt to more scenarios, for example, a parking garage not included in a map, so that the vehicle can be parked into a parking space more accurately, thereby improving a parking success rate.

In a possible implementation, sending the control data to the vehicle may include: obtaining a first path from the at least one path; and sending the control data to the vehicle, where the control data carries the first path, and the first path indicates the vehicle to travel along the first path to implement the function corresponding to the selected icon. Therefore, in this implementation of this application, a path obtained when the vehicle performs a required function may be selected by an electronic device, for example, may be selected by the user, so that the user can select an adaptive driving path based on an actual scenario, thereby improving user experience and improving driving safety.

In a possible implementation, the method may be applied to an electronic device, and the method may further include: if a position of the vehicle overlaps a position of the electronic device, sending an image displayed on the electronic device to the vehicle, to display the image on a display of the vehicle. Therefore, in this implementation of this application, when the vehicle travels to an area of the electronic device, for example, when the user gets on the vehicle, a display interface of the electronic device may be transferred to the vehicle for display, thereby improving viewing experience of the user.

In a possible implementation, if the selected icon is the roaming parking icon, the method may further include: sending a roaming parking indication to the vehicle, where the roaming parking indication indicates the vehicle to search for an available parking space and travel into the available parking space; and correspondingly, displaying the path obtained when the vehicle implements the function corresponding to the selected icon may include: obtaining positioning information of the vehicle traveling to the available parking space, and synchronously displaying the positioning information. Therefore, in this implementation of this application, when the vehicle is indicated to perform roaming parking, a parking space searching path of the vehicle may be displayed on the electronic device in real time, so that roaming parking of the vehicle is more transparent, and user experience is improved.

In a possible implementation, the method may further include: obtaining recommendation information based on information currently generated by the vehicle, where the recommendation information includes information recommended to the vehicle; generating a recommendation card based on the recommendation information; and displaying the recommendation card, where the recommendation card includes an entry of a function that is of the vehicle and that is recommended to be enabled.

Therefore, in this implementation of this application, the recommendation information may be further generated, that is, a recommendation for a function that needs to be enabled in an actual scenario. For example, in each scenario, an intent of the user may be analyzed, to recommend a required function to the user, thereby improving user experience.

In a possible implementation, obtaining the recommendation information based on the information currently generated by the vehicle may include: obtaining information about the vehicle in a historical time segment, where the historical time segment is a time segment that is in a historical time period and that corresponds to a current time segment; and obtaining the recommendation information based on the information in the historical time segment and the information generated by the vehicle in the current time segment.

Therefore, in this implementation of this application, a recommendation may be provided for the user in the current time segment based on information about the user in a same time segment in history, so that recommended content better meets a user requirement, and user experience is improved.

In a possible implementation, the recommendation information includes at least one of the following recommended information: an exclusive parking space recommendation, a charging parking space recommendation, a roaming vehicle finding function recommendation, a vehicle summoning-related position recommendation, a vehicle finding function recommendation, or a charging pile recommendation. Therefore, when a recommendation is provided for the user, a parking space that may be used or a function that may be used may be specifically recommended, to improve user experience.

According to a second aspect, this application provides a display method, applied to a vehicle, and including: first receiving control data from an electronic device, where the control data includes an instruction for instructing the vehicle to perform at least one of a valet parking function, a roaming parking function, or a summoning function; and then performing the at least one function based on the control data, and displaying a path obtained when the vehicle performs the at least one function.

Therefore, in this implementation of this application, entries of a plurality of functions may be set on a same platform, so that a user can more conveniently enable a required function, for example, the valet parking function, the roaming parking function, or the summoning function.

In a possible implementation, the control data is sent by the electronic device, and the method may further include: when a position of the vehicle overlaps a position of the electronic device, receiving an image displayed on the electronic device and displaying the image. In this implementation of this application, when the vehicle travels to an area of the electronic device, for example, when the user gets on the vehicle, a display interface of the electronic device may be transferred to the vehicle for display, thereby improving viewing experience of the user.

According to a third aspect, this application provides an electronic device. The electronic device includes a display, a memory, and one or more processors. The memory stores code of a graphical user interface of an application, and the one or more processors are configured to execute the code of the graphical user interface (GUI) stored in the memory, to display the graphical user interface on the display; and the graphical user interface includes:

A vehicle parking and vehicle finding interface is displayed, where the vehicle parking and vehicle finding interface includes a plurality of icons, the vehicle parking and vehicle finding interface includes a plurality of icons, the plurality of icons include at least one of a valet parking icon, a roaming parking icon, a summoning icon, or a vehicle finding icon, a function corresponding to the valet parking icon indicates a function of starting to park a vehicle into a parking space, the roaming parking icon indicates a function of searching for a parking space by the vehicle, the summoning indicates a function of traveling to a specified position by the vehicle, the vehicle finding indicates a function of obtaining a path to the vehicle, and the parking query indicates a function of querying a position of the vehicle.

For effects achieved in any one of the third aspect or the optional implementations of the third aspect, refer to descriptions of any one of the first aspect or the optional implementations of the first aspect. Details are not described below again.

In a possible implementation, the graphical user interface includes: In response to an operation on a selected icon in the vehicle parking and vehicle finding interface, a path obtained when a function corresponding to the selected icon is implemented is displayed.

In a possible implementation, the graphical user interface further includes: Information collected by a sensor in the vehicle when the function corresponding to the selected icon is implemented is displayed.

In a possible implementation, the graphical user interface includes: If the selected icon is the valet parking icon or the summoning icon, a path for the vehicle to travel to a first position is displayed; or if the selected icon includes the vehicle finding icon or the parking query icon, a path from the first position to the position of the vehicle is displayed.

In a possible implementation, the graphical user interface further includes: If the selected icon is the valet parking icon, the vehicle parking and vehicle finding interface further displays at least one available parking space, and the at least one available parking space is an unoccupied parking space; and in response to an operation on any one of the at least one available parking space, a path for parking the vehicle into a selected parking space is displayed.

In a possible implementation, the graphical user interface further includes: If the selected icon is the roaming parking icon, positioning information of the vehicle traveling to an available parking space is displayed.

In a possible implementation, the graphical user interface further includes: A recommendation card is displayed, where the recommendation card includes recommendation information obtained based on information currently generated by the vehicle, and the recommendation information includes a function that is of the vehicle and that is recommended to be enabled.

In a possible implementation, the recommendation information includes at least one of the following recommended information: an exclusive parking space recommendation, a charging parking space recommendation, a roaming vehicle finding function recommendation, a vehicle summoning-related position recommendation, a vehicle finding function recommendation, or a charging pile recommendation.

According to a fourth aspect, an embodiment of this application provides a display apparatus. The display apparatus has a function of implementing the display method according to the first aspect. The function may be implemented by using hardware, or may be implemented by using hardware executing corresponding software. The hardware or the software includes one or more modules corresponding to the foregoing function.

According to a fifth aspect, an embodiment of this application provides a display apparatus. The display apparatus has a function of implementing the display method according to the second aspect. The function may be implemented by using hardware, or may be implemented by using hardware executing corresponding software. The hardware or the software includes one or more modules corresponding to the foregoing function.

According to a sixth aspect, an embodiment of this application provides a display apparatus, including a processor and a memory. The processor and the memory are interconnected through a line, and the processor invokes program code in the memory to perform a processing-related function in the method shown in any implementation of the first aspect. Optionally, the display apparatus may be a chip.

According to a seventh aspect, an embodiment of this application provides a display apparatus. The display apparatus may also be referred to as a digital processing chip or a chip. The chip includes a processing unit and a communication interface. The processing unit obtains program instructions by using the communication interface, the program instructions are executed by the processing unit, and the processing unit is configured to perform a processing-related function in any one of the second aspect or the optional implementations of the second aspect.

According to an eighth aspect, an embodiment of this application provides a computer-readable storage medium including instructions. When the instructions are run on a computer, the computer is enabled to perform the method according to any optional implementation of the first aspect or the second aspect.

According to a ninth aspect, an embodiment of this application provides a computer program product including instructions. When the computer program product runs on a computer, the computer is enabled to perform the method according to any optional implementation of the first aspect or the second aspect.

According to a tenth aspect, an embodiment of this application provides a vehicle. The vehicle includes the apparatus according to the fifth aspect.

### BRIEF DESCRIPTION OF DRAWINGS

FIG. 1 is a diagram of an architecture of an interaction system according to this application;
FIG. 2 is a diagram of a structure of a vehicle according to this application;
FIG. 3 is a diagram of a structure of an electronic device according to this application;
FIG. 4 is a schematic flowchart of a display method according to this application;
FIG. 5 is a schematic flowchart of another display method according to this application;
FIG. 6 is a diagram of a GUI according to this application;
FIG. 7 is a diagram of another GUI according to this application;
FIG. 8 is a diagram of another GUI according to this application;
FIG. 9(a) to FIG. 9(c) are a diagram of another GUI according to this application;
FIG. 10 is a diagram of another GUI according to this application;
FIG. 11 is a diagram of another GUI according to this application;
FIG. 12 is a diagram of another GUI according to this application;
FIG. 13A to FIG. 13C are a diagram of another GUI according to this application;
FIG. 14A to FIG. 14C are a diagram of another GUI according to this application;
FIG. 15 is a diagram of another GUI according to this application;
FIG. 16 is a diagram of another GUI according to this application;
FIG. 17 is a diagram of another GUI according to this application;
FIG. 18 is a diagram of another GUI according to this application;
FIG. 19 is a diagram of another GUI according to this application;
FIG. 20 is a diagram of another GUI according to this application;
FIG. 21 is a diagram of another GUI according to this application;
FIG. 22A and FIG. 22B are a diagram of another GUI according to this application;
FIG. 23 is a diagram of another GUI according to this application;
FIG. 24 is a diagram of another GUI according to this application;
FIG. 25 is a diagram of another GUI according to this application;
FIG. 26 is a diagram of another GUI according to this application;
FIG. 27 is a diagram of another GUI according to this application;
FIG. 28 is a diagram of another GUI according to this application;
FIG. 29 is a diagram of another GUI according to this application;
FIG. 30 is a diagram of another GUI according to this application;
FIG. 31 is a diagram of another GUI according to this application;
FIG. 32 is a diagram of another GUI according to this application;
FIG. 33 is a diagram of another GUI according to this application;
FIG. 34 is a diagram of another GUI according to this application;
FIG. 35 is a diagram of another GUI according to this application;
FIG. 36 is a diagram of another GUI according to this application;
FIG. 37 is a diagram of another GUI according to this application;
FIG. 38 is a diagram of another GUI according to this application;
FIG. 39 is a diagram of another GUI according to this application;
FIG. 40 is a diagram of another GUI according to this application;
FIG. 41 is a diagram of another GUI according to this application;
FIG. 42 is a diagram of another GUI according to this application;
FIG. 43 is a diagram of another GUI according to this application;
FIG. 44 is a diagram of another GUI according to this application;
FIG. 45 is a diagram of another GUI according to this application;
FIG. 46 is a diagram of another GUI according to this application;
FIG. 47 is a diagram of another GUI according to this application;
FIG. 48 is a diagram of another GUI according to this application;
FIG. 49 is a diagram of another GUI according to this application;
FIG. 50 is a diagram of another GUI according to this application;
FIG. 51 is a diagram of another GUI according to this application;
FIG. 52 is a diagram of another GUI according to this application; and
FIG. 53 is a diagram of a structure of a display apparatus according to this application.

### DESCRIPTION OF EMBODIMENTS

The following describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of this application.

The method provided in this application may be applied to a plurality of autonomous driving or assisted driving scenarios, and may be used to provide, in a visual interface for a user, entries of functions such as auto parking, roaming parking, finding a person by a vehicle, finding a vehicle by a person, or parking query. Therefore, the user does not need to perform multi-terminal jumping and switching, thereby saving time and energy of the user for finding the vehicle, parking the vehicle, and picking up the vehicle, greatly improving smooth experience before and after vehicle use, and improving user experience.

In other words, the method provided in this application may be applied to an intelligent driving scenario of a vehicle, for example, autonomous driving or assisted driving. Assisted driving means that a user is assisted in driving a vehicle, and autonomous driving means that a vehicle drives autonomously.

Generally, autonomous driving may be classified into a plurality of levels. At different autonomous driving levels (L0 to L5), an advanced driver assistance system (advanced driver assistance system, ADAS) may implement different function levels based on an artificial intelligence algorithm and information obtained by a plurality of sensors. The autonomous driving levels (L0 to L5) are based on a classification standard of the SAE (Society of Automotive Engineers: Society of Automotive Engineers). L0 indicates no automation, L1 indicates driving assistance, L2 indicates partial automation, L3 indicates conditional automation, L4 indicates high automation, and L5 indicates full automation. L1 indicates single-function-level automation. A driver cannot perform control with neither hands nor feet, and is still responsible for driving safety. However, some functions have been automatically performed, such as adaptive cruise control, emergency braking assistance, and lane keeping. L2 indicates partial automation. A driver may not operate a vehicle in some preset environments, that is, neither hands nor feet are used for control. However, the driver still needs to be responsible for driving safety and be ready, at any time, to take over a driving right of the vehicle in a short time. L3 indicates conditional automation. To be specific, on preset roads such as a highway and an urban road with a small quantity of pedestrians, a vehicle performs autonomous driving and is responsible for driving safety. A driver does not need to monitor a road condition, but still needs to take over the vehicle sometimes. L4 indicates high automation. An autonomous driving system completes all driving operations, and based on system requests, a driver may not need to respond to all system requests. L5 indicates full automation. An autonomous driving system completes all driving operations, and a driver takes over a vehicle in possible cases. Tasks of monitoring and responding to road conditions at L1 to L3 are jointly completed by a driver and a system, and the driver needs to take over a dynamic driving task. L4 and L5 can enable the driver to completely become a passenger. Currently, functions that can be implemented by an ADAS mainly include but are not limited to: adaptive cruise control (ACC), automatic emergency braking (AEB), auto parking (AP), blind spot monitoring (BSM), front cross traffic alert/brake FCTA/B, rear cross traffic alert/brake (RCTA/B), forward collision warning (FCW), lane departure warning (LDW), lane keeping assist (LKA), rear collision warning (RCW), traffic sign recognition (TSR), traffic jam assist (TJA), highway assist (HWA), and the like. It should be understood that the foregoing functions may have specific modes at different autonomous driving levels (L0 to L5). A higher autonomous driving level corresponds to a more intelligent mode. For example, auto parking may include APA (Auto Parking Assist: auto parking assist), RPA (Remote Parking Assist: remote parking assist), and AVP (Auto Valet Parking: auto valet parking). For APA, a driver does not need to control a steering wheel, but still needs to control an accelerator and a brake on a vehicle. For RPA, a driver may use an electronic device (for example, a mobile phone) to remotely park a vehicle outside the vehicle. For AVP, a vehicle may complete parking without a driver. Certainly, the vehicle may alternatively include a driver or a passenger. For example, AVP includes manned AVP (a person is on the vehicle) and unmanned AVP (no person is on the vehicle). Manned AVP may be classified into L2 and L3, and unmanned AVP may be classified into L4. AVP mentioned in this application may include manned AVP or unmanned AVP. In terms of corresponding autonomous driving levels, APA is approximately at L1, RPA is approximately at L2 and L3, and AVP is approximately at L4.

The method provided in this application is used to provide an integrated platform for functions such as auto parking, roaming parking, finding a person by a vehicle, finding a vehicle by a person, or parking query for a vehicle, so that a user can implement a required function in an electronic device or an in-vehicle electronic device. The method is applicable to driving scenarios corresponding to the foregoing driving levels such as L0 to L5. In other words, an intelligent driving function mentioned below in this application may include functions used to implement the foregoing driving levels such as L0 to L5. For example, the intelligent driving function mentioned in this application may specifically include functions such as APA, AVP, ACC, RPA remote parking, RDA straight-in and straight-out, or AEB.

The following describes a system architecture, a vehicle structure, and a procedure provided in this application.

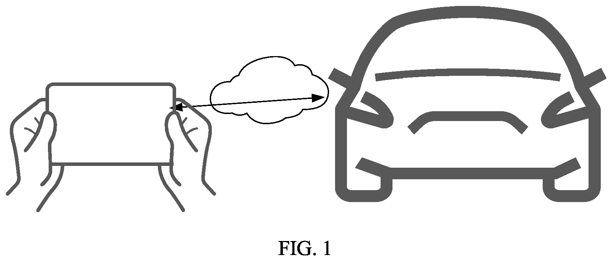

First, this application provides an interaction system, which may specifically include an electronic device and a vehicle. As shown in FIG. 1, a connection may be established between the electronic device and the vehicle, and usually a wireless connection may be established.

The electronic device may be configured to provide a user with a visible function platform that integrates summoning, parking, vehicle finding, and the like. Through the connection established between the electronic device and the vehicle, the vehicle is controlled to implement a function required by a user. For example, the user may implement functions such as APA, AVP, RPA, summoning, or finding a person by a vehicle, and may further query a position of the vehicle, so that the user can find the required vehicle in time.

The vehicle may be configured to implement, under an indication of the electronic device, functions such as APA, AVP, RPA, or finding a person by a vehicle.

Therefore, in the interaction system provided in this application, through the function platform that is disposed in the electronic device and that integrates summoning, parking, vehicle finding, and the like, functions such as vehicle summoning, parking, and vehicle finding can be provided for the user, so that the user can efficiently perform an operation or search for the vehicle, thereby implementing a one-click remote operation, and improving user experience.

The following separately describes a structure of a vehicle and a structure of an electronic device provided in this application.

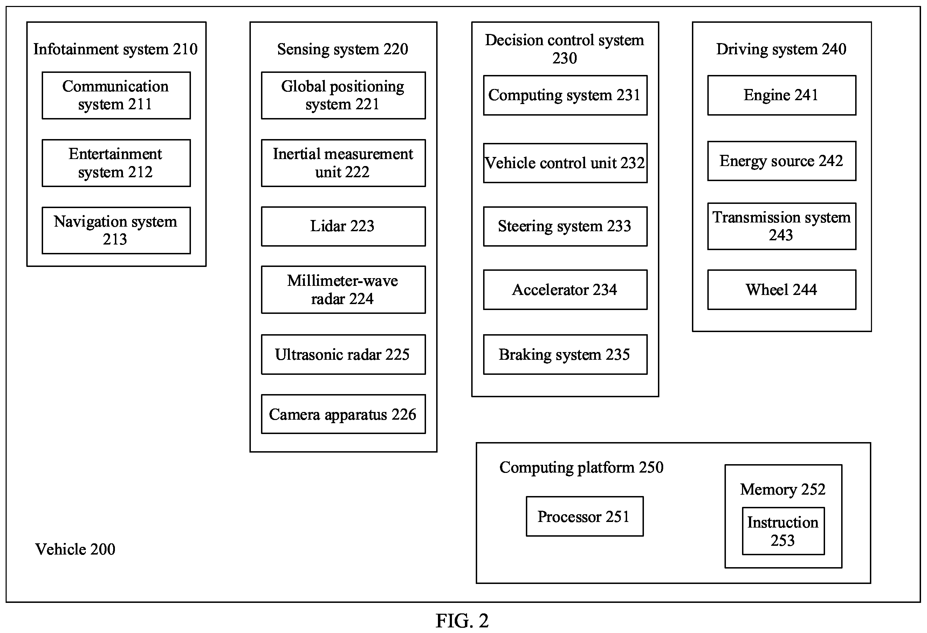

For example, FIG. 2 is a diagram of a structure of a vehicle according to an embodiment of this application. FIG. 2 is a functional block diagram of a vehicle 200 according to an embodiment of this application. The vehicle 100 may be configured to be in a fully or partially autonomous driving mode, for example, may be specifically configured to implement driving functions at the foregoing autonomous driving levels such as L0 to L5. For example, the vehicle 200 may obtain surrounding environment information of the vehicle by using a sensing system 220, and obtain an autonomous driving strategy based on analysis on the surrounding environment information to implement fully autonomous driving, or present an analysis result to a user to implement partially autonomous driving.

The vehicle 200 may include various subsystems, such as an infotainment system 210, the sensing system 220, a decision control system 230, a driving system 240, and a computing platform 250. Optionally, the vehicle 200 may include more or fewer subsystems, and each subsystem may include a plurality of components. In addition, the subsystems and components of the vehicle 200 may be connected to each other in a wired or wireless manner. A model that needs to be verified and that is mentioned below in this application may include a model used to implement each system or subsystem in the vehicle.

In some embodiments, the infotainment system 210 may include a communication system 211, an entertainment system 212, and a navigation system 213.

The communication system 211 may include a wireless communication system 211, and the wireless communication system 211 may wirelessly communicate with one or more devices directly or through a communication network. For example, the wireless communication system 211 may use 3G cellular communication such as CDMA, EVD0, or GSM/GPRS; 4G cellular communication such as LTE; or 5G cellular communication. The wireless communication system 211 may communicate with a wireless local area network (wireless local area network, WLAN) through Wi-Fi. In some embodiments, the wireless communication system 246 may directly communicate with a device by using an infrared link, Bluetooth, or ZigBee. The wireless communication system 211 may include one or more dedicated short-range communication (dedicated short-range communication, DSRC) devices. These devices may include public and/or private data communication between vehicles and/or roadside stations.

The entertainment system 212 may include a central control screen, a microphone, and a speaker. The user may listen to the radio or play music in the vehicle based on the entertainment system 212. Alternatively, a mobile phone is connected to the vehicle, and screen projection of the mobile phone is implemented on the central control screen. The central control screen may be a touchscreen, and the user may perform an operation by touching the screen. In some cases, a voice signal of the user may be obtained by using the microphone, and some control performed by the user on the vehicle 200 is implemented based on analysis on the voice signal of the user, for example, a temperature inside the vehicle is adjusted. In some other cases, music may be played for the user by using the speaker.

The navigation system 213 may include a map service provided by a map provider, to provide navigation of a traveling route for the vehicle 200, and the navigation system 213 may be used together with a global positioning system 221 and an inertial measurement unit 222 of the vehicle. The map service provided by the map provider may be a two-dimensional map or a high-definition map.

In addition, in some driving scenarios, information about an environment in which the vehicle is located, navigation information, or the like may be further displayed on the central control screen. The central control screen may be one of displays mentioned in the following implementations of this application.

The sensing system 220 may include several sensors that sense information about the surrounding environment of the vehicle 200. For example, the sensing system 220 may include the global positioning system 221 (the global positioning system may be a GPS system, or may be a BeiDou system or another positioning system), the inertial measurement unit (inertial measurement unit, IMU) 222, a lidar 223, a millimeter-wave radar 224, an ultrasonic radar 225, and a camera apparatus 226. The sensing system 220 may further include sensors (for example, an in-vehicle air quality monitor, a fuel gauge, and an engine oil thermometer) of an internal system of the monitored vehicle 200. Sensor data from one or more of these sensors may be used to detect an object and corresponding features (a position, a shape, a direction, a speed, and the like) of the object. Such detection and recognition are key functions for a safe operation of the vehicle 200.

The global positioning system 221 may be configured to determine a geographical position of the vehicle 200.

The inertial measurement unit 222 is configured to sense a position and an orientation change of the vehicle 200 based on an inertial acceleration. In some embodiments, the inertial measurement unit 222 may be a combination of an accelerometer and a gyroscope.

The lidar 223 may sense, by using a laser, an object in the environment in which the vehicle 200 is located. In some embodiments, the lidar 223 may include one or more laser sources, a laser scanner, one or more detectors, and another system component.

The millimeter-wave radar 224 may sense an object in the surrounding environment of the vehicle 200 by using a radio signal. In some embodiments, in addition to sensing the object, the millimeter-wave radar 224 may be further configured to sense a speed and/or a moving direction of the object.

The ultrasonic radar 225 may sense an object around the vehicle 200 by using an ultrasonic signal.

The camera apparatus 226 may be configured to capture image information of the surrounding environment of the vehicle 200. The camera apparatus 226 may include a monocular camera, a binocular camera, a structured light camera, a panoramic camera, and the like. The image information obtained by the camera apparatus 226 may include static image information, and may further include video stream information.

The decision control system 230 includes a computing system 231 that performs analysis and decision-making based on information obtained by the sensing system 220. The decision control system 230 further includes a vehicle control unit 232 that controls a power system of the vehicle 200, and a steering system 233, an accelerator 234, and a braking system 235 that are configured to control the vehicle 200.

The computing system 231 may process and analyze various types of information obtained by the sensing system 220 to recognize a target, an object, and/or a feature in the surrounding environment of the vehicle 200. The target may include a pedestrian or an animal, and the object and/or the feature may include a traffic signal, a road boundary, and an obstacle. The computing system 231 may use technologies such as an object recognition algorithm, a structure from motion (Structure from Motion, SFM) algorithm, and video tracking. In some embodiments, the computing system 231 may be configured to draw a map for an environment, track an object, estimate a speed of the object, and the like. The computing system 231 may analyze the various types of obtained information and obtain a control strategy for the vehicle.

The vehicle control unit 232 may be configured to coordinate and control a power battery and an engine 241 of the vehicle, to improve power performance of the vehicle 200.

The steering system 233 may be configured to adjust a moving direction of the vehicle 200. For example, in an embodiment, the steering system may be a steering wheel system.

The accelerator 234 is configured to control an operating speed of the engine 241 and further control a speed of the vehicle 200.

The braking system 235 is configured to control the vehicle 200 to decelerate. The braking system 235 may use friction to reduce a rotational speed of wheels 244. In some embodiments, the braking system 235 may convert kinetic energy of the wheels 244 into a current. The braking system 235 may alternatively reduce a rotational speed of the wheels 244 in another manner, to control the speed of the vehicle 200.

In addition, the decision control system 230 may further include a dashboard (not shown in FIG. 2). The dashboard is usually disposed near the steering wheel of the vehicle, or is disposed at a position in the vehicle that is convenient for a user to observe. The dashboard may also be one of the displays mentioned in this application.

In some possible scenarios, data displayed on the central control screen and the dashboard may be combined for display on one display, or the central control screen and the dashboard may be a same display or areas for split-area display on a same display.

The driving system 240 includes a component that provides power for the vehicle 200 to move. In an embodiment, the driving system 240 may include an engine 241, an energy source 242, a transmission system 243, and the wheels 244. The engine 241 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 241 converts the energy source 242 into mechanical energy.

Examples of the energy source 242 include gasoline, diesel, other oil-based fuels, propane, other compressed gas-based fuels, ethanol, solar panels, batteries, and other power sources. The energy source 242 may also provide energy for another system of the vehicle 200.

The transmission system 243 may transmit mechanical power from the engine 241 to the wheels 244. The transmission system 243 may include a gearbox, a differential gear, and a drive shaft. In an embodiment, the transmission system 243 may further include another component, for example, a clutch. The drive shaft may include one or more shafts that may be coupled to one or more wheels 244.

Some or all functions of the vehicle 200 are controlled by the computing platform 250. The computing platform 250 may include at least one processor 251. The processor 251 may execute instructions 253 stored in a non-transitory computer-readable medium such as a memory 252. In some embodiments, the computing platform 250 may alternatively be a plurality of computing devices that control individual components or subsystems of the vehicle 200 in a distributed manner.

The processor 251 may be any conventional processor, for example, a commercially available CPU. Alternatively, the processor 251 may include a graphics processing unit (graphics processing unit, GPU), a field programmable gate array (field programmable gate array, FPGA), a system on chip (system on chip, SOC), a microcontroller unit (microcontroller unit, MCU), an application-specific integrated circuit (application-specific integrated circuit, ASIC), or a combination thereof. The processor 251 may be located on a device far away from the vehicle and perform wireless communication with the vehicle.

In some embodiments, the memory 252 may include instructions 253 (for example, program logic), and the instructions 253 may be executed by the processor 251 to perform various functions of the vehicle 200. The memory 252 may also include additional instructions, including instructions used to send data to, receive data from, interact with, and/or control one or more of the infotainment system 210, the sensing system 220, the decision control system 230, and the driving system 240.

In addition to the instructions 253, the memory 252 may further store data, such as a road map, route information, a position, a direction, a speed, and other similar vehicle data of the vehicle, and other information. Such information may be used by the vehicle 200 and the computing platform 250 when the vehicle 200 operates in an autonomous mode, a semi-autonomous mode, and/or a manual mode.

The computing platform 250 may control the functions of the vehicle 200 based on inputs received from various subsystems (for example, the driving system 240, the sensing system 220, and the decision control system 230). For example, the computing platform 250 may use an input from the decision control system 230 to control the steering system 233 to avoid an obstacle detected by the sensing system 220. In some embodiments, the computing platform 250 may be operated to provide control over many aspects of the vehicle 200 and the subsystems of the vehicle.

Optionally, one or more of the foregoing components may be installed separately from or associated with the vehicle 200. For example, the memory 252 may be partially or completely separated from the vehicle 200. The foregoing components may be communicatively coupled together in a wired and/or wireless manner.

Optionally, the foregoing components are merely examples. In actual application, components in the foregoing modules may be added or removed according to an actual requirement. FIG. 2 should not be construed as a limitation on embodiments of this application.

An autonomous driving vehicle traveling on a road, for example, the foregoing vehicle 200, may recognize an object in a surrounding environment of the vehicle to determine an adjustment to a current speed. The object may be another vehicle, a traffic control device, or an object of another type. In some examples, each recognized object may be considered independently, and a speed to which the autonomous driving vehicle is to be adjusted may be determined based on a respective feature of the object, such as a current speed and an acceleration of the object, and a spacing between the object and the vehicle.

Optionally, the vehicle 200 or a sensing and computing device (for example, the computing system 231 and the computing platform 250) associated with the vehicle 200 may predict behavior of the recognized object based on the features of the recognized object and a state (for example, traffic, rain, and ice on a road) of the surrounding environment. Optionally, each recognized object depends on behavior of another recognized object, and therefore all recognized objects may be further considered together to predict behavior of a single recognized object. The vehicle 200 can adjust the speed of the vehicle based on the predicted behavior of the recognized object. In other words, the autonomous driving vehicle can determine, based on the predicted behavior of the object, a stable state to which the vehicle needs to be adjusted (for example, acceleration, deceleration, or stop). In this process, another factor may alternatively be considered to determine the speed of the vehicle 200, for example, a horizontal position of the vehicle 200 on the road on which the vehicle travels, curvature of the road, and proximity of a static object and a dynamic object.

In addition to providing an instruction to adjust the speed of the autonomous driving vehicle, the computing device may further provide an instruction to modify a steering angle of the vehicle 200, so that the autonomous driving vehicle follows a given trajectory and/or keeps safe transverse and longitudinal distances from an object near the autonomous driving vehicle (for example, a car in an adjacent lane of the road).

The vehicle 200 may be a car, a truck, a motorcycle, a bus, a ship, an airplane, a helicopter, an entertainment car, a playground vehicle, a construction device, a tram, a golf cart, a train, or the like. This is not specially limited in embodiments of this application.

The electronic device provided in this application may also be referred to as a terminal, and may include a processor, a display, and the like. The processor may be configured to perform the display method provided in this application. The display may display, when triggered by the processor, data that needs to be displayed, and provide a user with a one-click operation interface for a vehicle.

The electronic device may specifically include but is not limited to: an intelligent mobile phone, a television, a tablet computer, a wristband, a head-mounted display device (Head Mount Display, HMD), an augmented reality (augmented reality, AR) device, a mixed reality (mixed reality, MR) device, a cellular phone (cellular phone), a smartphone (smartphone), a personal digital assistant (personal digital assistant, PDA), a tablet computer, an in-vehicle terminal, a laptop computer (laptop computer), a personal computer (personal computer, PC), and the like. Certainly, in the following embodiments, a specific form of the electronic device is not limited.

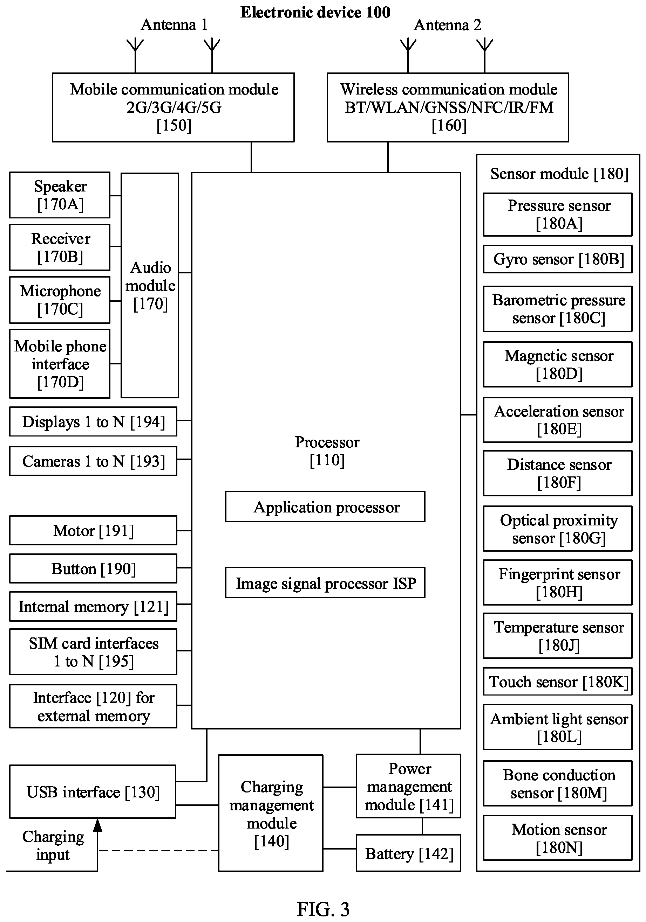

For example, refer to FIG. 3. The following uses a specific structure as an example to describe a structure of an electronic device provided in this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a motion sensor 180N, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may be configured to perform audio communication, and sample, quantize, and code analog signals. In some embodiments, the audio module 170 may be coupled to the wireless communication module 160 by using a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device. It should be understood that, the USB interface 130 herein may also be replaced with another interface, for example, an interface that may implement charging or data transmission, such as a Type-C interface or a lighting interface. The USB interface 130 herein is merely used as an example for description.

It may be understood that the interface connection relationship between the modules shown in this embodiment of the present invention is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an ultra-wideband (ultra-wideband, UWB), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include but is not limited to: a 5th generation mobile communication technology (5th-Generation, 5G) system, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (Bluetooth), a global navigation satellite system (the global navigation satellite system, GNSS), wireless fidelity (wireless fidelity, Wi-Fi), near field communication (near field communication, NFC), FM (which may also be referred to as frequency modulation broadcasting), ZigBee (ZigBee), a radio frequency identification (radio frequency identification, RFID) technology, an infrared (infrared, IR) technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), a satellite based augmentation system (satellite based augmentation systems, SBAS), and/or the like.

In some implementations, the electronic device 100 may also include a wired communication module (which is not shown in FIG. 1), or the mobile communication module 150 or the wireless communication module 160 herein may be replaced with a wired communication module (which is not shown in FIG. 1). The wired communication module may enable the electronic device to communicate with another device via a wired network. The wired network may include but is not limited to one or more of the following: an optical transport network (optical transport network, OTN), a synchronous digital hierarchy (synchronous digital hierarchy, SDH), a passive optical network (passive optical network, PON), an Ethernet (Ethernet), a flexible Ethernet (flex Ethernet, FlexE), or the like.

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into an image signal in a standard format, for example, RGB camera or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The interface 120 for external memory may be configured to connect to an external memory card, such as a micro SD card, to extend a storage capability of the electronic device 100. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS). The processor 110 performs various function applications and data processing of the electronic device 100 by running the instructions stored in the internal memory 121 and/or instructions stored in the memory disposed in the processor.

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an eSIM, namely, an embedded SIM card. The eSIM card may be embedded in the electronic device 100, and cannot be separated from the electronic device 100.

It should be noted that, in some actual application scenarios, the electronic device may include more or fewer components than those shown in FIG. 3, which may be specifically adjusted based on an actual application scenario. This is not limited in this application.

The following describes a method procedure provided in this application with reference to the foregoing structures of the vehicle and the electronic device.

For manual parking and manual vehicle finding, there are already vehicle finding applications based on driving/walking for a parking space and corresponding navigation. However, map information (an amount is usually small) of a third-party parking lot is strongly relied on. In addition, in a navigation process, driving or walking navigation is often inaccurate due to inaccurate positioning or a delay of a mobile phone, and finally a wrong road is taken, resulting in poor practicability. For vehicle position recording, common map navigation applications provide a function of manually recording a parking space number. However, due to a deep hierarchy and complex operations, a user usually forgets the parking space number. Some vehicles support automatic memorization and photo shooting, but still cannot record a specific vehicle position in an underground parking garage, and it is difficult to distinguish between environment information based on photos of the underground parking garage.

In addition, some of existing unmanned parking or summoning functions in the industry have strong requirements on a line-of-sight range, or depend on a fixed parking space or summoning point and a corresponding route preset on a vehicle side. Use of the functions is limited and not flexible, and is basically limited to home use scenarios. In addition, a start button and traveling status display are provided, but more vehicle traveling statuses cannot be presented for users. As a result, the users do not trust or dare to use the functions.

For example, in some scenarios in which a person searches for a parking space or a vehicle, there is a complete map and rich position information, a real-time position can be displayed, and driving or walking navigation can be performed. However, positioning of a mobile phone is inaccurate and delayed, causing the vehicle/person to walk in the wrong way; and operations of manually recording a parking space number or taking photos to memorize a surrounding environment of the vehicle are complex. A driving route does not support autonomous driving, and the person cannot leave the vehicle.

For another example, in a vehicle finding scenario, a vehicle position may be recorded and a photo may be taken, a user views the vehicle position, and SD map navigation is supported. Some vehicles support recording of an environmental photo of a parking space, and the vehicle may be found by using the environmental photo. However, a position in a parking lot cannot be recorded, and information about a parking space number cannot be accurately obtained by taking photos. An environment in an underground parking garage is similar, and a vehicle cannot be found.

For another example, in an unmanned valet parking and summoning solution, unmanned valet parking in a fixed parking space and unmanned summoning at a fixed summoning point are supported. A mobile phone side supports only an external activation function, to notify a user of a normal or abnormal state of current valet parking. However, the parking space or summoning point cannot be changed, and there is no vehicle finding route when valet parking is unavailable. This limits a use position and range of the user and lacks flexibility. The surrounding environment cannot be viewed, and vehicle behavior cannot be obtained. This may cause tension of the user.

It is clear that, in parking and vehicle use scenarios, the user still needs to use a plurality of apps across a plurality of terminals, causing a large use burden to the user. In addition, inconvenient use experience such as difficulty in finding a vehicle and a long time for finding a vehicle is not essentially resolved.

Therefore, this application provides a display method, to cover a plurality of scenarios of parking and vehicle pickup, and integrate summoning, parking, and vehicle finding. A mobile terminal and a vehicle are connected to each other, and a user does not need to perform multi-terminal jumping and switching, thereby saving time and energy of the user for finding the vehicle, parking the vehicle, and picking up the vehicle. This greatly improves smooth experience before and after vehicle use, and brings the user more convenience. In addition, a corresponding function can be accurately and intelligently recommended based on a travel scenario and habit of the user, thereby implementing one-click function enabling and improving user experience.

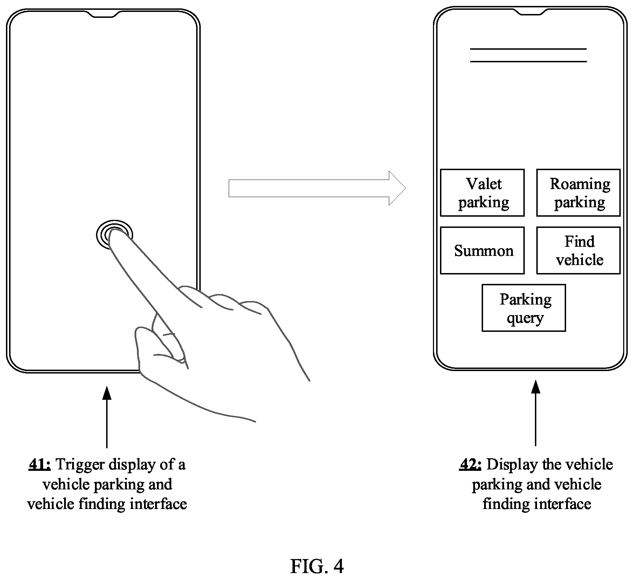

FIG. 4 is a schematic flowchart of a display method according to this application.

41: Trigger display of a vehicle parking and vehicle finding interface.

The method provided in this application may be deployed on an electronic device, and the vehicle parking and vehicle finding interface may be directly displayed on a home screen of a display of the electronic device; or the method may be deployed on an electronic device in a manner of an app, and the vehicle parking and vehicle finding interface is displayed on a display of the electronic device after a user triggers to start the app.

For different deployment manners, there may be different trigger operations for triggering display of the vehicle parking and vehicle finding interface.

For example, if the method provided in this application is directly deployed as a system application of the electronic device, for example, the vehicle parking and vehicle finding interface can be directly displayed on the home screen of the electronic device, the trigger operation may be specifically an operation of powering on the electronic device, an operation of waking up the electronic device, or the like.

For another example, if the method provided in this application is an app deployed on the electronic device, the user may tap or touch an entry icon displayed on a desktop, to trigger display of the vehicle parking and vehicle finding interface.

In addition, for different application scenarios, other triggering manners may be further set, for example, triggering through a voice or a gesture. This is not limited in this application.

42: Display the vehicle parking and vehicle finding interface.

In response to the trigger operation for the vehicle parking and vehicle finding interface, the vehicle parking and vehicle finding interface may be displayed.

In FIG. 4, the vehicle parking and vehicle finding interface may include but is not limited to one or more of the following function entries and corresponding icons: a valet parking icon 411, a roaming parking icon 412, a summoning icon 413, a vehicle finding icon 414, or a parking query icon 415.

A function corresponding to the valet parking icon indicates a function of starting to park a vehicle into a parking space, the roaming parking icon indicates a function of searching for any vacant parking space and parking into the parking space by the vehicle, the summoning indicates a function of traveling to a specified position by the vehicle, the vehicle finding indicates a function of obtaining a path to the vehicle, and the parking query indicates a function of querying a position of the vehicle.

In this implementation of this application, functions such as parking, summoning, vehicle finding, or position query may be integrated into one display interface, that is, one function combination. The user may select, based on a requirement, a function that needs to be enabled, to avoid switching back and forth between different functions to select the required function, and implement one-click enabling of functions such as parking, summoning, vehicle finding, or position query for the vehicle, thereby improving user experience.

It should be noted that, in this embodiment of this application, a method procedure provided in this application is first described. For a specific display interface of the electronic device, refer to a related display interface of the following GUI part. Details are not described herein again.

In a possible scenario, when the user selects one of the icons, the method provided in this application may further include: in response to an operation on the selected icon in the vehicle parking and vehicle finding interface, indicating the vehicle to implement a function corresponding to the selected icon, for example, sending a control instruction to the vehicle, so that the vehicle implements the function corresponding to the selected icon; and displaying a path obtained when the vehicle implements the function corresponding to the selected icon. Therefore, in this implementation of this application, the user may select any icon to implement one-click enabling of a vehicle function, thereby improving user experience.

In a possible implementation, when the vehicle implements the function corresponding to the selected icon, for example, a valet parking function, a roaming parking function, or a summoning function, in a process of executing a task, the vehicle may further collect real-time environment information of the vehicle by using a sensor disposed in the vehicle, and transmit the real-time environment information to the electronic device. After receiving the real-time environment information, the electronic device may display the real-time environment information in a display interface, so that the user can observe, by using the display of the electronic device, a real-time environment in which the vehicle is located, and learn of a current status of the vehicle in time, thereby improving user experience.

In a possible scenario, for functions such as valet parking, summoning, vehicle finding, or parking query, positions at two ends of a path usually need to be determined. One end is a position of the vehicle (which may be referred to as a second position for ease of differentiation), and the other end may be a selected position or a position of the electronic device (which may be referred to as a first position for ease of differentiation). One or more paths between the first position and the second position may be generated, and the one or more paths are displayed on the display. Therefore, in this implementation of this application, the path between the first position and the second position of the vehicle may be displayed in the display interface, so that the user can intuitively learn how to move from the first position to the second position, how to move from the second position to the first position, or the like.

Optionally, in a parking scenario, information about one or more available parking spaces may be further obtained, and the one or more available parking spaces are displayed in a display interface. If the user needs to park the vehicle into one of the available parking spaces, the user may select the parking space in the display interface, and then in response to an operation on any one of the at least one available parking space, a position of the selected available parking space may be obtained as the first position. Then, a path for traveling from the position of the vehicle to the available parking space may be obtained. The path may be generated by the electronic device and then sent to the vehicle. For example, the electronic device may generate one or more paths. When there is only one path, the path may be directly sent to the vehicle. When there are a plurality of paths, one of the paths may be sent to the vehicle. Specifically, the user may select a traveling path of the vehicle, or one (which may be referred to as a first path for ease of differentiation) of the paths may be selected according to a preset rule and sent to the vehicle. For example, a shortest path, a path with lowest congestion, or a path with highest safety is sent. This may be specifically determined according to an actual application scenario. In addition, after the position of the available parking space is determined, the vehicle may generate the path for traveling from the position of the vehicle to the available parking space.

After the path for parking into the available parking space is determined, the vehicle may be parked into the available parking space based on the path. In addition, during parking, real-time correction may be performed based on data collected by the sensor of the vehicle, so that the vehicle can be successfully parked into the parking space.

Generally, the vehicle may synchronize a real-time position of the vehicle to the electronic device. Therefore, the electronic device may display the position of the vehicle on the display in real time, so that the user can learn of a real-time status of the vehicle.

In addition, in a possible scenario, the vehicle may collect information about an environment in which the vehicle is located, and the vehicle or the electronic device may determine an available parking space, that is, the foregoing available parking space, based on the collected environment information. Therefore, in this implementation of this application, the vehicle may implement map memorization, so that a status of the available parking space can be accurately simulated. In addition, when the vehicle position is searched for, an accurate position of the vehicle, information about the parking space, and the like may be determined based on more accurate map information that is actually collected, thereby improving intelligent driving accuracy of the vehicle.

Certainly, the information about the environment in which the vehicle is located may be alternatively collected by another device and then sent to the vehicle or the electronic device. For example, a map may be received from a cloud, or a map of a parking lot and a vacant status of a parking space may be obtained from a connected parking lot management device. This is not limited in this application.

In a possible scenario, if the position of the electronic device overlaps the position of the vehicle, or the vehicle arrives at the position of the electronic device, an image displayed on the display of the electronic device may be sent to the vehicle, to display the image in the vehicle. For example, in some scenarios, when the vehicle is in valet parking, if the user gets on the vehicle during parking, an image displayed on the electronic device of the user may be transferred to the display of the vehicle for display, so that the user can continue to view the display interface of the electronic device after getting on the vehicle, thereby improving user experience. For another example, in some scenarios, when the user summons the vehicle, the user may get on the vehicle during traveling of the vehicle, and after the user gets on the vehicle, an image displayed on the electronic device of the user may be transferred to the display of the vehicle for display, so that the user can continue to view the display interface of the electronic device after getting on the vehicle, thereby improving user experience.

In addition, for the roaming parking function, a parking position of the vehicle is usually to be determined, and specifically, an available parking space may be searched for through traveling of the vehicle. In other words, in a roaming parking scenario, after the user triggers the roaming parking function, the electronic device may send a roaming parking indication to the vehicle, to indicate the vehicle to search for an available parking space that can be shared and travel into the available parking space, so as to complete parking. When the vehicle implements the roaming parking function, the vehicle may synchronously send real-time positioning information of the vehicle to the electronic device. Therefore, the electronic device may synchronously display the real-time positioning information of the vehicle, so that the user can learn of a position of the vehicle in real time. In addition, after finding an available parking space through search, the vehicle may synchronize position information of the available parking space and a parking status to an electronic device side, and the user may view an ID and detailed position information of the parking space on the electronic device side, so as to implement more transparent roaming parking.

In addition, in some possible implementations, recommendation information may be further obtained. The recommendation information may include recommended information generated for the vehicle. For example, the recommendation information may include a function recommended to the vehicle for enabling, and then the recommendation information may be displayed in a display interface. For example, specifically, a recommendation card may be generated based on the recommendation information, and the recommendation card is displayed in the display interface. The recommendation card may include an entry button of the function recommended to the vehicle for enabling. Therefore, the function that is recommended to be enabled may be further displayed in the display interface, so that the user can obtain an entry of a required function more quickly, thereby reducing interaction steps of selecting a function and selecting a destination, and improving user experience.

Optionally, when the recommendation information is obtained, the recommendation information may be generated based on information about the vehicle in a historical time segment and information about the vehicle in a current time segment. The historical time segment may include a time segment that is in a historical time period and that corresponds to the current time segment. For example, one day may be used as one period, and 10 o'clock to 12 o'clock on a previous day may be a time segment corresponding to 10 o'clock to 12 o'clock on a current day. Therefore, a function that may be currently required by the vehicle may be inferred based on historical information generated when the user uses the vehicle, so that the user can select the required function more quickly, thereby improving user experience.

For example, if the current time segment is a meal time segment of the user, navigation to a nearby restaurant may be recommended to the user. If a current state of charge of the vehicle is too low, position distribution of nearby charging piles may be recommended to the vehicle, and the user selects a charging pile and generates navigation. If the user is currently in a parking lot in a frequently visited area, a frequently used parking space or a convenient parking space may be recommended to the user. Therefore, recommendation may be performed based on a requirement that may be generated by the user, so that user experience can be improved.

For example, when the user selects a function in the recommendation information, the function may be enabled for the user, so that the user can select a required function more quickly, thereby improving user experience.

Specifically, content of the foregoing recommendation may specifically include but is not limited to one or more of the following: an exclusive parking space recommendation, a charging parking space recommendation, a roaming vehicle finding function recommendation, a vehicle summoning-related position recommendation, a vehicle finding function recommendation, a charging pile recommendation, or the like. The exclusive parking space recommendation is to recommend an exclusive parking space for the vehicle. The charging parking space recommendation is to recommend, to the user, a parking space that can be used for charging, for example, a parking space with a charging pile installed. The roaming vehicle finding function recommendation is to recommend the user to enable a roaming vehicle finding function. The vehicle summoning-related position recommendation is to recommend the user to summon the vehicle to the position. The vehicle finding function recommendation is to recommend the user to enable a vehicle finding function. The charging pile recommendation is to recommend a nearby charging pile position to the user.

For example, for a valet parking scenario, the following may be specifically recommended:
Exclusive parking space recommendation: If there is a fixed parking space/exclusive parking space in a frequently visited area such as the home/the company, the user is recommended to park into the exclusive parking space.
Auto parking space search: For a position that is not frequently visited, after the user drives into a campus/underground parking garage and gets off at any position, a roaming auto parking space search function is recommended. There is no need to set a destination. After tapping, a parking space is automatically searched for in a nearby area.
Charging parking space recommendation: If a state of charge of an ego vehicle is lower than a specified value (for example, endurance is lower than 10%), it is automatically recommended to go to a charging area or a charging parking space in a parking lot.
Quick vehicle pickup recommendation: In a campus at a same position, if the user has used the summoning function or memorized a summoning point last time, the user is recommended to park in an area near the summoning point, so that the vehicle is quickly picked up for use next time.

For another example, for a vehicle pickup or vehicle use scenario, the following may be specifically recommended:
When an ego vehicle is not powered on, and current time is in a vehicle use time segment for commuting of the user, a vehicle finding and summoning function is automatically recommended to the user.

Drop-off point recommendation: Further, if the user uses an unmanned valet parking function last time to park into a parking space, a last drop-off point is memorized and is recommended as a current summoning point by default.

Recommending a nearby pedestrian entrance and exit based on the position of the electronic device: Further, a position such as a nearest elevator entrance may be automatically adsorbed and recommended based on a current position of the user, and is recommended for current summoning.

Common summoning point recommendation: In a same campus, a summoning point used by the user last time is memorized, and is actively recommended based on position information.

Therefore, in this embodiment of this application, recommendation may be performed for various scenarios of the user, so that the user can efficiently and conveniently enable a required function or query required information, thereby improving user experience.

In addition, in a valet parking, roaming parking, or summoning process, when the vehicle travels along a planned path, an exception such as an obstacle, a blind spot of a field of view, or a complex road condition may occur on a road. In this case, the vehicle may decelerate or stop for avoidance based on an actual scenario. In addition, the vehicle may further send a current status and a captured image to the electronic device. Therefore, the electronic device may synchronously display a traveling status of the vehicle, so that the user can learn whether there is an obstacle, a blind spot, or a complex road condition on the traveling path of the vehicle. In this way, transparency during function execution of the vehicle is implemented, and user experience is improved.

In addition, in some scenarios, a network connection exception such as a poor signal or disconnection between the electronic device and the vehicle may occur. In this case, if the vehicle is in a traveling state, the vehicle may be controlled to decelerate, stop, or the like, and the network connection exception is synchronously displayed on the display of the electronic device, so that the user can control the vehicle as soon as possible, thereby improving driving safety of the vehicle.

In addition, for a procedure in which the electronic device needs to interact with the vehicle, for example, enabling the valet parking function, the summoning function, or the roaming parking function, an instruction needs to be sent to the vehicle, so that the vehicle implements a required function.

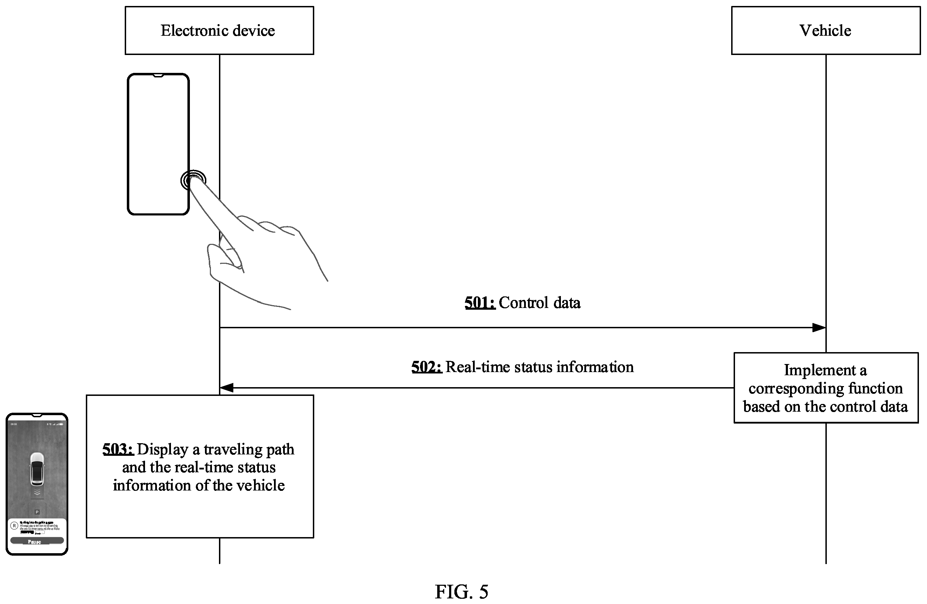

FIG. 5 is a schematic flowchart of another display method according to this application. Details are as follows.

501: An electronic device sends control data to a vehicle in response to an operation on a vehicle parking and vehicle finding interface.

For details about the vehicle parking and vehicle finding interface, refer to related descriptions in step 41. Details are not described herein again.

When a user enables, by using the vehicle parking and vehicle finding interface, one of functions that needs interaction with the vehicle, corresponding control data may be generated, and the control data is sent to the vehicle.

For example, the user may select a valet parking icon to enable a valet parking function of the vehicle. The electronic device may generate, in response to a trigger operation for the valet parking icon, a control instruction for controlling the vehicle to perform valet parking, and include the control instruction in the control data for sending to the vehicle. After selecting the valet parking icon, the user may further select a parking space. Therefore, the control data may further carry position information of the parking space. In addition, if a parking path of the vehicle is determined by the electronic device, the control data may further carry the parking path of the vehicle.

For another example, the user may select a roaming parking icon to enable a roaming parking function. After detecting a trigger operation for the roaming parking function, the electronic device may generate a control instruction for controlling the vehicle to perform roaming parking, and include the control instruction in the control data for sending to the vehicle. In a roaming parking scenario, usually, the user may not specify a parking space, and the vehicle automatically searches for an available parking space and parks into the available parking space.

For another example, the user may select a summoning icon to enable a summoning function of the vehicle. After detecting a trigger operation for the summoning function, the electronic device may generate a control instruction for controlling the vehicle to perform roaming parking, and include the control instruction in the control data for sending to the vehicle. In a vehicle summoning scenario, a specified summoning position may be further carried in the control data, so that the vehicle is summoned to the summoning position.

Therefore, in this application, a system for interaction between the electronic device and the vehicle is used, so that the user can implement one-click enabling of a function on an electronic device side, thereby improving user experience.

502: The vehicle implements a corresponding function based on the control data, and synchronously sends real-time status information to the electronic device.

After receiving the control data sent by the electronic device, the vehicle may implement the corresponding function, and synchronously send the real-time status information to the electronic device. The real-time status information may specifically include information generated inside the vehicle or environment information collected in a traveling process of the vehicle.

For example, in the traveling process of the vehicle, the vehicle may send map information, a vehicle position, a navigation path, a surrounding environment, a driving intent, or the like to the electronic device in real time. In this way, the user uses the vehicle with greater confidence, a situation of an entire procedure is under control, and a one-click remote operation is implemented.

For example, in a valet parking scenario, the vehicle may send information such as a real-time position of the vehicle, an environmental image captured during traveling, and a parking path to the electronic device, and information such as a state of charge or a vehicle speed of the vehicle may be further included.

For another example, in a roaming parking scenario, the vehicle may send information such as a real-time position of the vehicle, an environmental image captured during traveling, and a found available parking space to the electronic device. When finding the available parking space, the vehicle may directly park into the available parking space, or send inquiry information to the electronic device to request to indicate whether to park into the available parking space. After the user determines that the vehicle can park into the available parking space, the vehicle may park into the available parking space.

For another example, in a vehicle summoning scenario, the vehicle may send, to the electronic device, information such as a real-time position of the vehicle, an environmental image captured during traveling, and a path for traveling to a summoning position.

503: The electronic device displays a traveling path and the real-time status information of the vehicle.

In a process of performing the function, the vehicle may synchronously send the real-time status information to the electronic device, and the electronic device may display the real-time status information on a display.

Therefore, in this implementation of this application, when implementing a function such as valet parking, roaming parking, or summoning, the vehicle may send the real-time status information to the electronic device, so that a procedure of implementing the function by the vehicle is completely transparent, and a one-click enabling of the vehicle function and a remote operation are implemented, thereby improving user experience.

The foregoing describes the method procedure provided in this application. The following provides joint descriptions with reference to the method, the electronic device, and the GUI provided in this application.

It should be noted that, for the display interface mentioned in the foregoing method procedure, refer to a corresponding display interface in the following GUI. For ease of understanding, the following describes, in more detail with reference to the GUI, the display interface displayed on the electronic device.

First, the electronic device provided in this application may specifically include a mobile terminal, or may include an in-vehicle terminal, or may include a vehicle or the like. Specifically, the electronic device may include one or more displays, a memory, and one or more processors. The one or more processors are configured to execute one or more computer programs stored in the memory, that is, the memory stores code of a graphical user interface of an application, and the one or more processors are configured to execute the code of the GUI stored in the memory. The display is configured to display the GUI stored in the memory.

The following describes the GUI mentioned in this application. The graphical user interface includes:
A vehicle parking and vehicle finding interface is displayed, where the vehicle parking and vehicle finding interface includes a plurality of icons, the vehicle parking and vehicle finding interface includes a plurality of icons, the plurality of icons include at least one of a valet parking icon, a roaming parking icon, a summoning icon, a vehicle finding icon, or a parking query icon, a function corresponding to the valet parking icon indicates a function of starting to park a vehicle into a parking space, the roaming parking icon indicates a function of searching for a parking space by the vehicle, the summoning indicates a function of traveling to a specified position by the vehicle, the vehicle finding indicates a function of obtaining a path to the vehicle, and the parking query indicates a function of querying a position of the vehicle.

In this implementation of this application, at least one of the valet parking icon, the roaming parking icon, the summoning icon, the vehicle finding icon, or the parking query icon may be displayed in the GUI, so that a platform integrating functions of valet parking, roaming parking, vehicle summoning, vehicle finding, or parking query can be implemented. In this way, the user can select a required function in a same display interface without switching a page, so that one-click enabling of each function can be implemented, improving user experience.

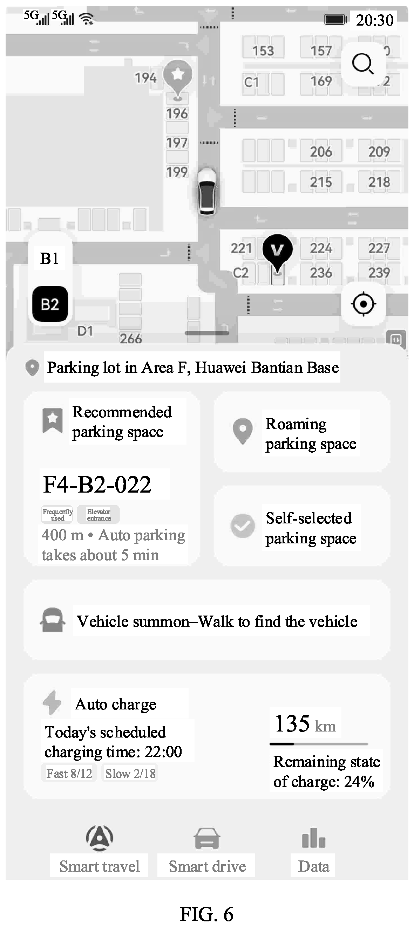

For example, the vehicle parking and vehicle finding interface may be shown in FIG. 6. Key functions such as valet parking, roaming parking, summoning, vehicle finding navigation, and parking information viewing are integrated in a same display interface. As shown in FIG. 6, "Recommended parking space" or "Self-selected parking space" may be selected to implement valet parking. "Recommended parking space" is to park the vehicle into a recommended parking space, and "Self-selected parking space" is to park the vehicle into a parking space selected by the user. The summoning and vehicle finding functions may be integrated into a same entry, for example, a "Vehicle summon-Walk to find the vehicle" icon shown in FIG. 6. Whether to specifically select vehicle summoning or vehicle finding navigation may be further displayed by selecting the icon.

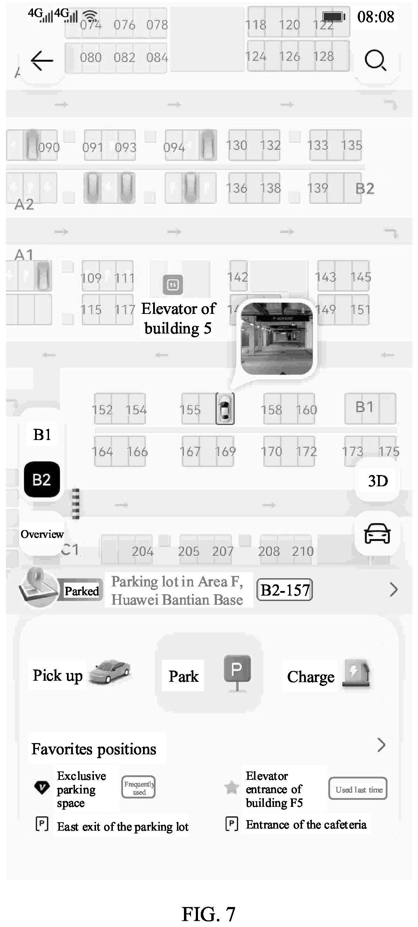

For another example, the vehicle parking and vehicle finding interface may be alternatively shown in FIG. 7. When the vehicle is parked into a parking space, icons may be classified into: pickup, park, charge, and other icons, such as a favorites position of the user. When the user selects the pickup icon, a summoning or parking positioning function may be enabled. When the user selects the parking icon, a parking function may be enabled.

In addition, a current position of the vehicle and information about an environment in which the vehicle is located or internal information of the vehicle may be further displayed in a display interface, for example, information such as a parking space near the vehicle and a remaining state of charge of the vehicle.

In other words, in the GUI provided in this application, enabling entries of a plurality of functions are provided in a same display interface. The user may select a required function in the same interface. That is, functions such as parking map visualization, walking to find the vehicle (across the ground and a plurality of floors of the underground parking garage), intelligent vehicle summoning to find a person, one-click valet parking for a personal exclusive parking space/any parking space on a map, and automatically searching for a vacant parking space for parking may be supported by using a same platform. The user does not need to switch an application to find a required function, thereby saving time and energy for the user to find the vehicle, park the vehicle, and pick up the vehicle, and greatly improving experience and vehicle use efficiency before and after vehicle use.

Optionally, the graphical user interface may further include: In response to an operation on a selected icon in the vehicle parking and vehicle finding interface, a path obtained when a function corresponding to the selected icon is implemented is displayed. In this implementation of this application, the user may select any icon displayed in the display interface to trigger implementation of a required function. When the required function is implemented, information generated when the function is implemented may be displayed, such as a path or a vehicle status. Therefore, when the required function is implemented, for example, parking or summoning, information generated when the function is implemented may be displayed in real time, for example, a vehicle traveling path, a navigation path, or a vehicle status, so as to implement transparency of the function and improve user experience.

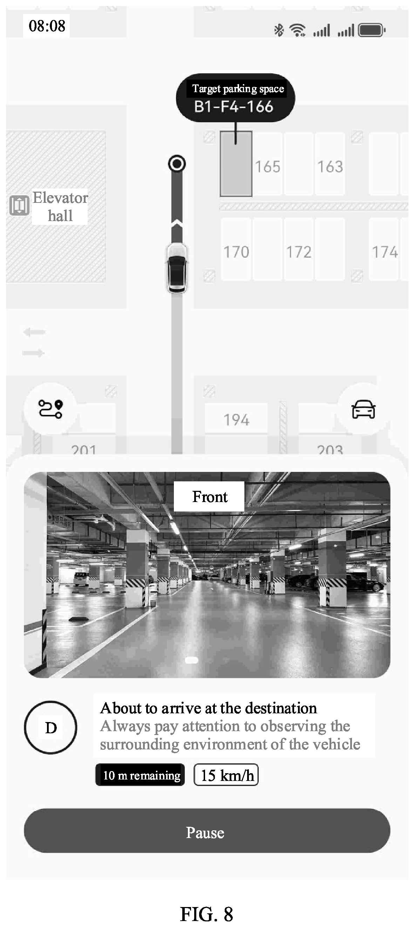

For example, in one of the scenarios, when the vehicle is parked, data in a parking process may be transmitted to the electronic device, and the electronic device may display the data in a display interface. As shown in FIG. 8, the GUI may specifically include a front image of the vehicle, a distance from a destination, alarm prompt information (for example, "Always pay attention to observing the surrounding environment of the vehicle"), a vehicle speed, a parking path, and the like. In this way, the parking process of the vehicle is transparent.

In addition, in some scenarios, a recommendation card may be further displayed. The recommendation card may include recommendation information obtained based on information currently generated by the vehicle, and the recommendation information includes a function that is of the vehicle and that is recommended to be enabled. Different recommendation cards may be displayed in different areas, time segments, scenarios, or the like.

The recommended function or information may specifically include but is not limited to: an exclusive parking space recommendation, a charging parking space recommendation, a roaming vehicle finding function recommendation, a vehicle summoning-related position recommendation, a vehicle finding function recommendation, a charging pile recommendation, or the like.

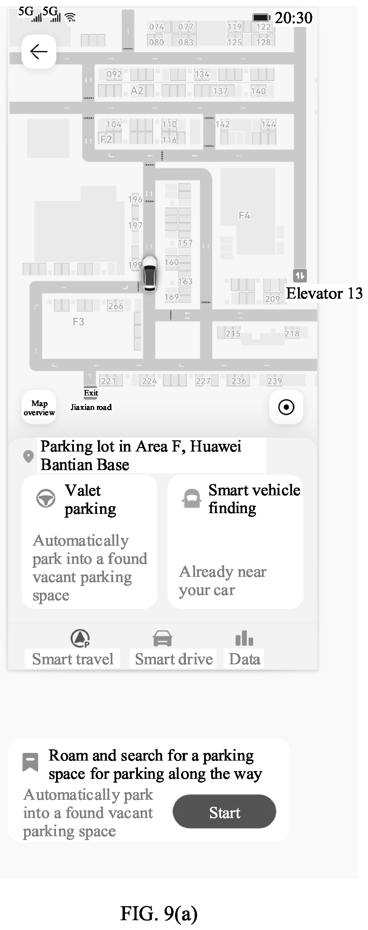

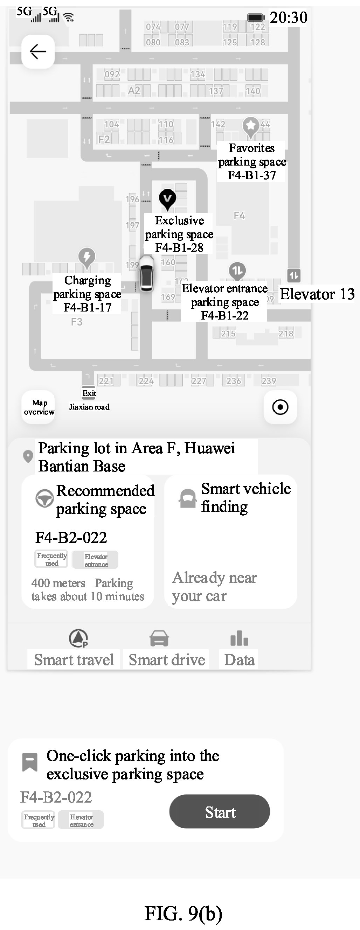

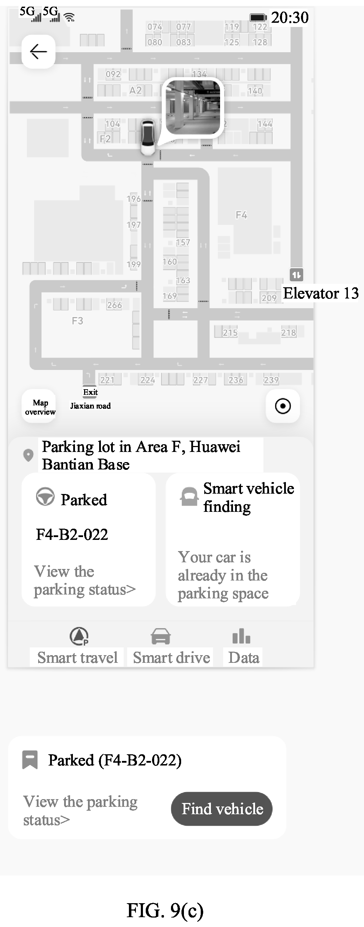

For example, as shown in FIG. 9(a), when the vehicle is in a parking lot, the recommendation card may be a recommendation for a roaming vehicle finding function, and the user may enable the roaming vehicle finding function based on a selection operation on the recommendation card. In FIG. 9(b), when the vehicle is near an exclusive parking space, a one-click parking function for parking into the exclusive parking space may be recommended to the user, and the user may enable, based on a selection operation on the recommendation card, the function of one-click parking into the exclusive parking space. In FIG. 9(c), when the vehicle is parked in a parking space, current parking information of the vehicle may be displayed in the recommendation card, and the user may enable a vehicle finding function based on a selection operation on the recommendation card, so as to implement one-click vehicle finding.

The following describes GUI changes during implementation of different functions.

### 1. Valet parking

In a possible implementation, in response to a trigger operation for the valet parking icon, information generated when the vehicle performs valet parking may be displayed, for example, information such as a parking path for the vehicle to travel to a specified position (or referred to as a first position) and a vehicle status.

An entry of valet parking may be an entry of a home screen, or may be an entry in a recommendation card on another page, or the like. In different scenarios, the valet parking icon may have different positions.

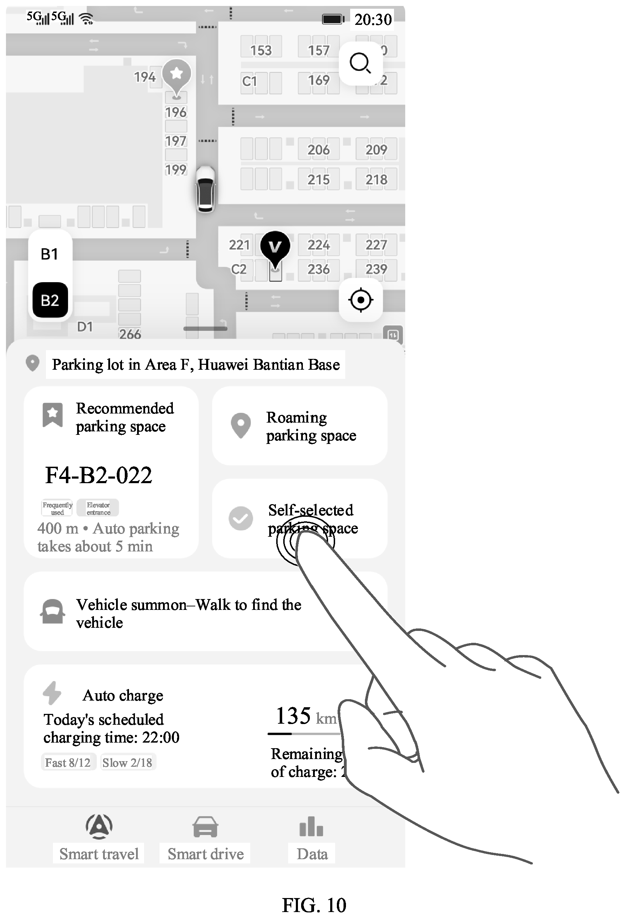

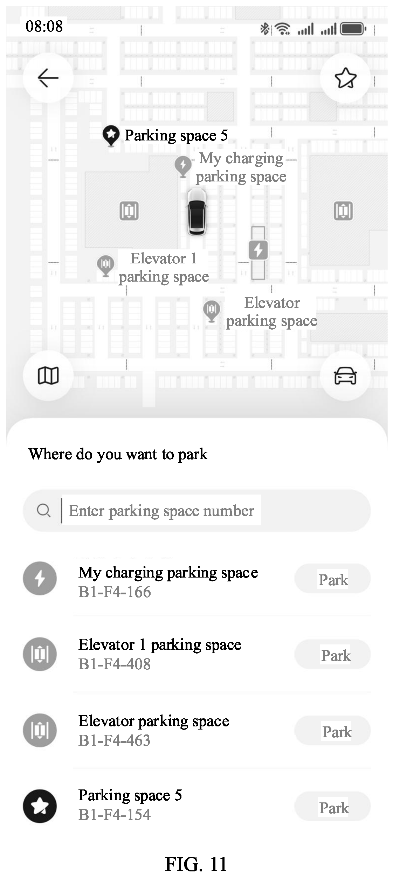

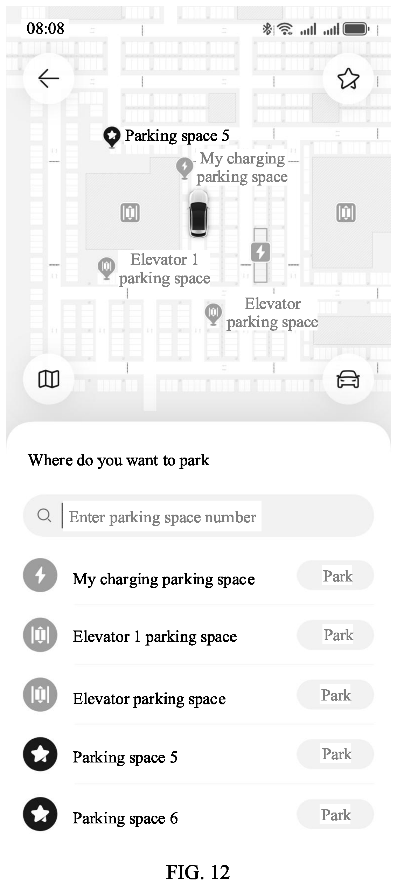

For example, as shown in FIG. 10, the user may select the "Self-selected parking space" icon, and then the display interface may jump to a parking space selection interface shown in FIG. 11 or FIG. 12. Recommended parking spaces may be displayed under a parking space search bar. A specific recommendation rule may include a parking space used last time, a parking space that is frequently used, a parking space that has been added to favorites by the user, and a labeled parking space; if there is no personal marked parking space, a parking space near an elevator/stairs is recommended; and a charging parking space ranks last. For example, refer to "My charging parking space", "Elevator 1 parking space", "Elevator parking space", "Parking space 5", or "Parking space 6" shown in FIG. 11 or FIG. 12. A difference between parking space display interfaces in FIG. 11 and FIG. 12 lies in that the recommended parking space shown in FIG. 11 may further carry a number of the recommended parking space. For example, a parking space number corresponding to "My charging parking space" is B1-F4-166, a number corresponding to "Elevator 1 parking space" is B1-F4-408, and so on.

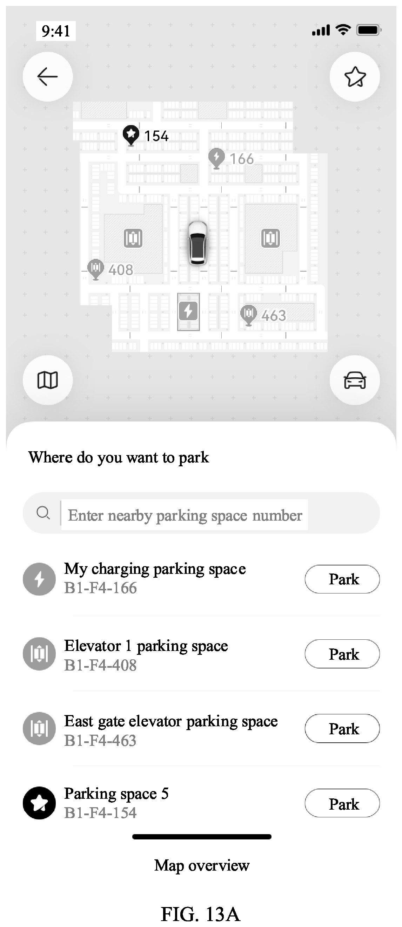

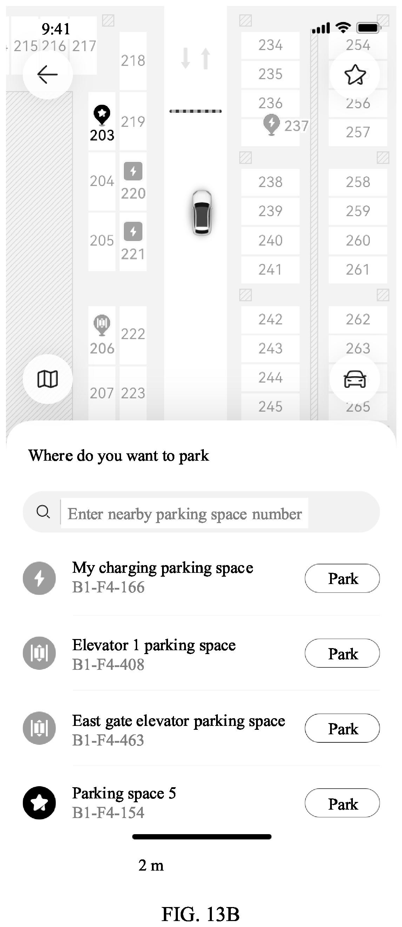

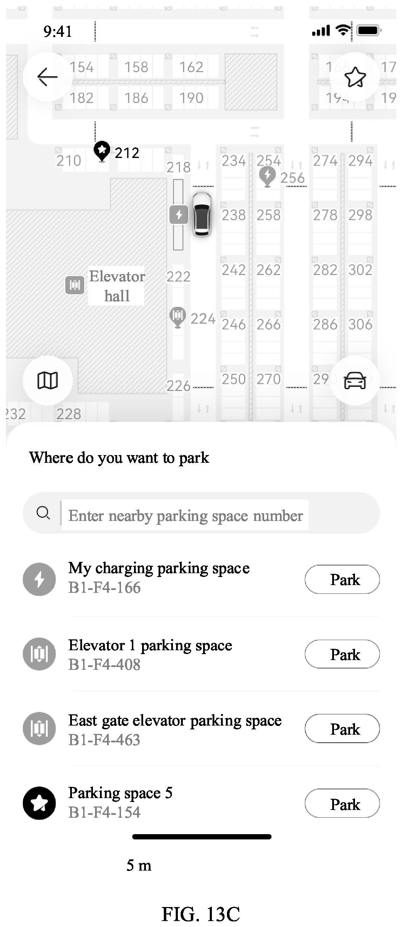

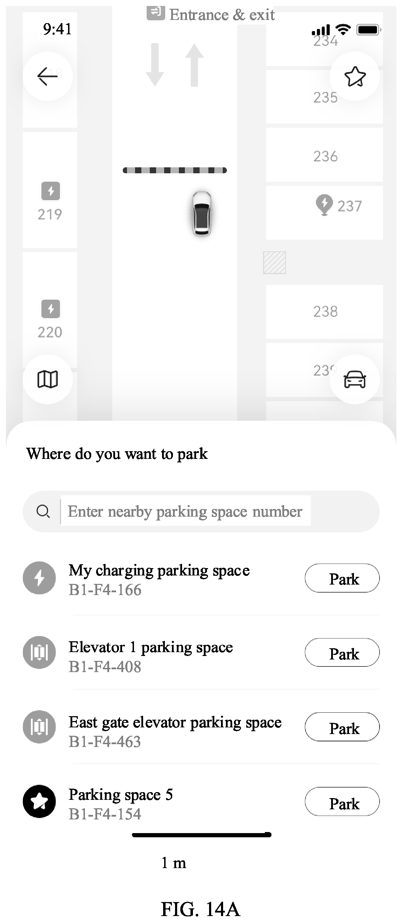

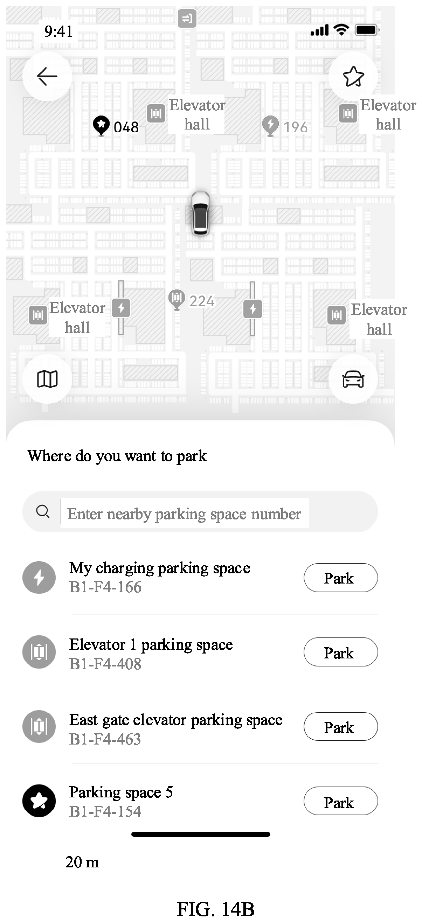

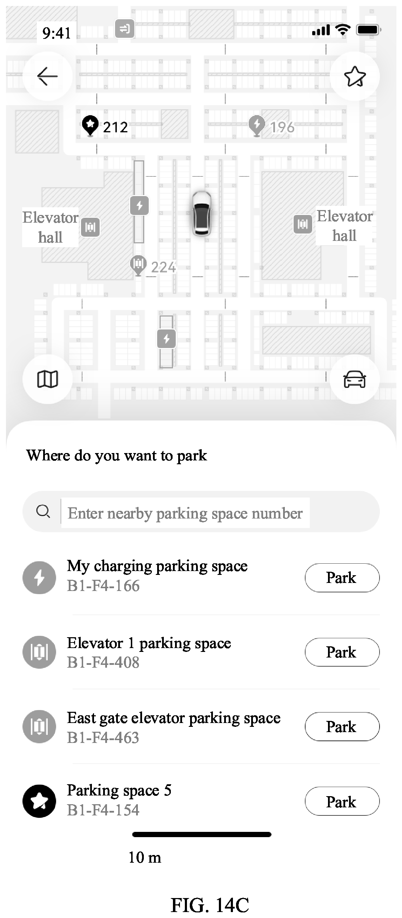

In addition, for display of the recommended parking space, a parking space map with a more suitable scale may be displayed in the display interface. For example, FIG. 13A to FIG. 13C and FIG. 14A to FIG. 14C show display statuses for an overview map of all parking spaces, 2 m (a length corresponding to a unit length in an actual scenario), 5 m, 1 m, 20 m, 10 m, and the like. It is clear that, a larger length corresponding to the unit length in an actual scenario indicates a larger quantity of displayed parking spaces, and fewer details on a displayed map. A smaller length corresponding to the unit length in an actual scenario indicates a smaller quantity of displayed parking spaces, and richer details on a displayed map.

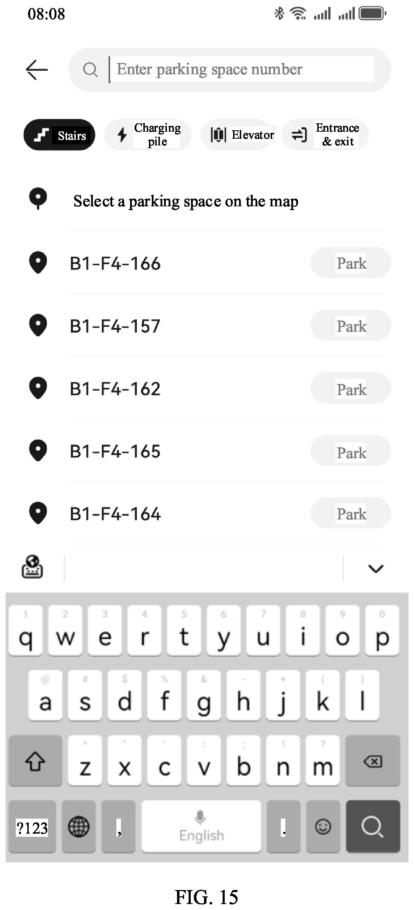

In addition, as shown in FIG. 15, the user may also enter a specified parking space in a search box. In addition, a recommended parking space may also be displayed in a search interface. For example, a parking space used last time, a parking space that is frequently used, a parking space that has been added to favorites by the user, and a labeled parking space may be recommended; if there is no personal marked parking space, a parking space near an elevator/stairs is recommended; and a charging parking space ranks last. For example, the user may choose to search "Stairs" (that is, a parking space near the stairs), "Charging pile" (that is, a parking space with a charging pile installed), "Power supply" (that is, a parking space with a power supply installed), or "Entrance & exit" (that is, a parking space near an entrance & exit of a parking lot), so that the user can quickly search for a parking space that meets a requirement.

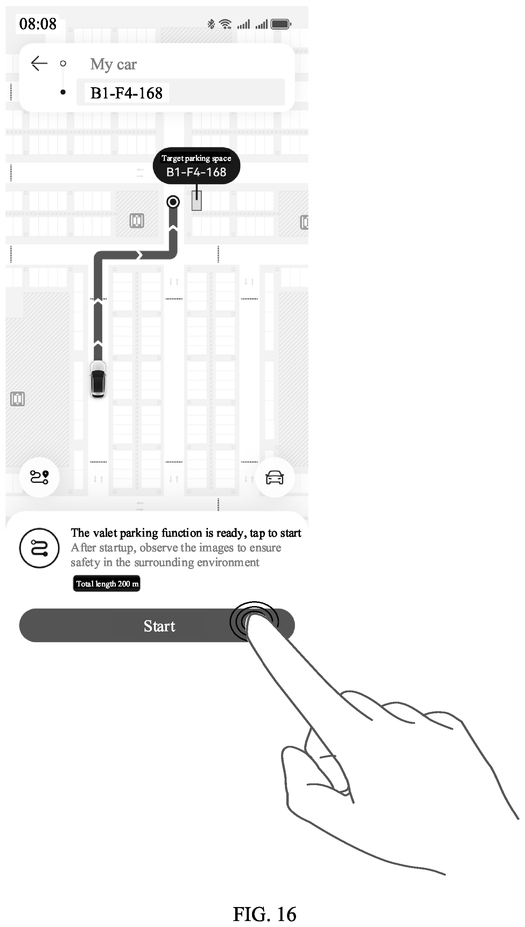

After a specified parking space is selected, a path for the vehicle to travel to the specified parking space may be planned. For example, as shown in FIG. 16, after the specified parking space is determined, a path for traveling from the current position of the vehicle to the specified parking space is planned. Optionally, an available state "The valet parking function is ready, tap to start" of a smart drive function may be further shown. After the user selects the "Start" button, valet parking may be performed.

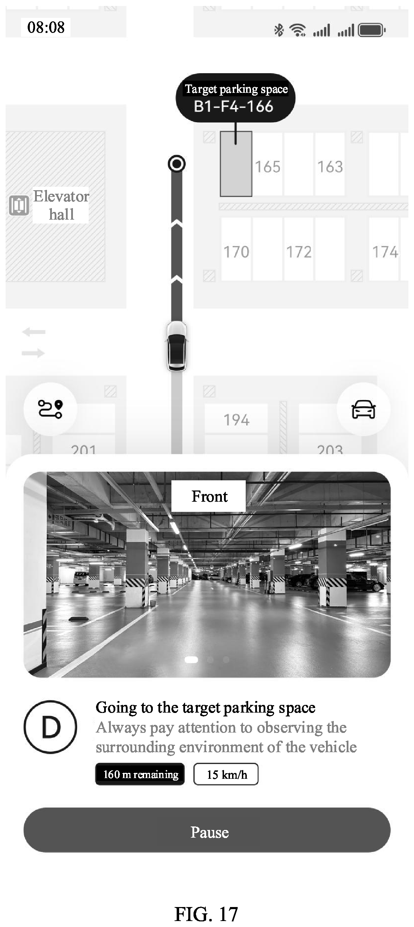

A display interface of a valet parking process may be shown in FIG. 17. A traveling path of the vehicle and a captured real-time environmental image may be displayed in the display interface, and a current position of the vehicle is displayed in real time. In addition, the specified parking space may be further highlighted. For example, "Target parking space B1-F4-166" may be highlighted in FIG. 15.

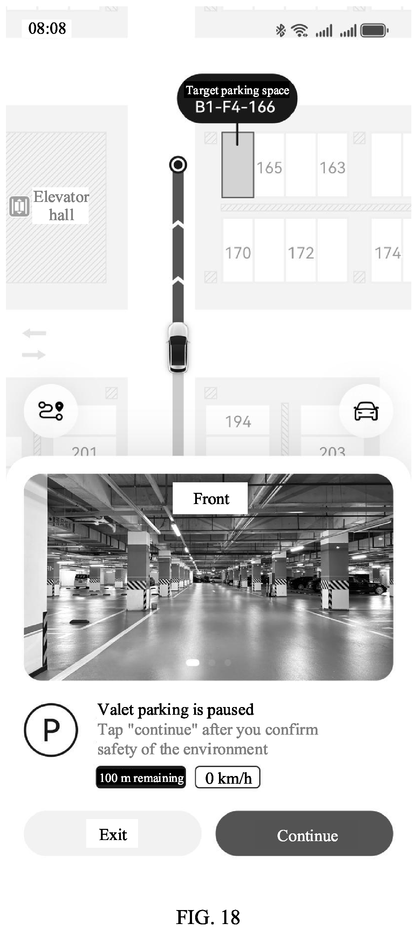

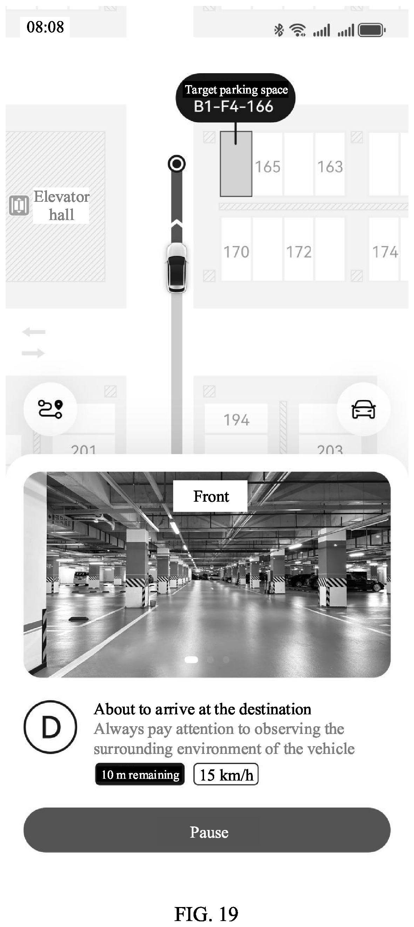

In addition, the valet parking process may be paused or exited at any time. For example, a pause button may be set at the bottom of the interface shown in FIG. 15. After the user selects the pause button, as shown in FIG. 18, the vehicle may be indicated to pause valet parking, and a continue button and an exit button may be displayed in the display interface. If the user selects the exit button, the valet parking function may be exited to return to a home screen. If the user selects the continue button, valet parking may continue to be performed, as shown in FIG. 19.

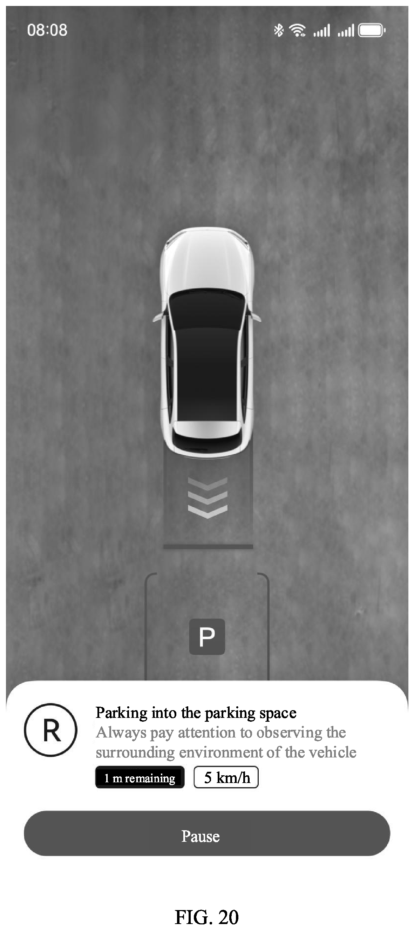

Optionally, when the vehicle is about to enter the parking space, as shown in FIG. 20, a process of parking the vehicle into the parking space may be highlighted.

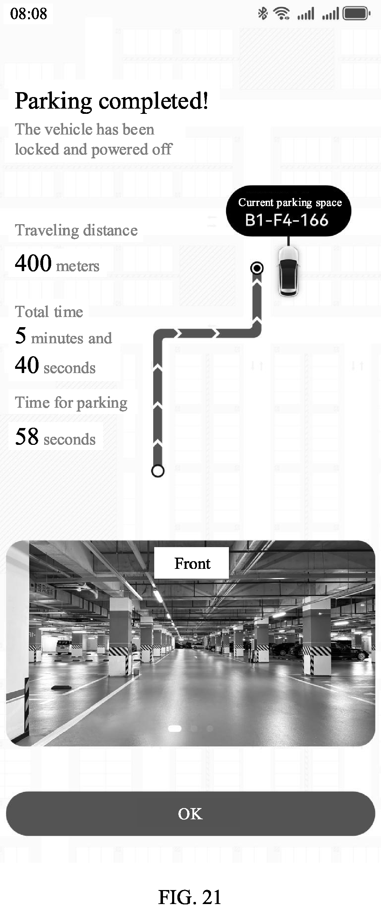

After parking of the vehicle is completed, a prompt indicating that parking is completed may be displayed in the display interface. As shown in FIG. 21, in this case, information generated in a parking process is also synchronously displayed. For example, data in the parking process may include: a current gear, a traveling speed, a remaining distance, a remaining overview path, a traveled path, and parking completion summary data: a traveling distance, total time, parking time, path overview, a target parking space, an in-vehicle ID, and an image (front view, rear view, or top view), for example, a traveling distance of 400 meters, total time of 5 minutes and 40 seconds, parking time of 58 seconds, a parking path, a position for parking into the parking space, and a front view of the vehicle.

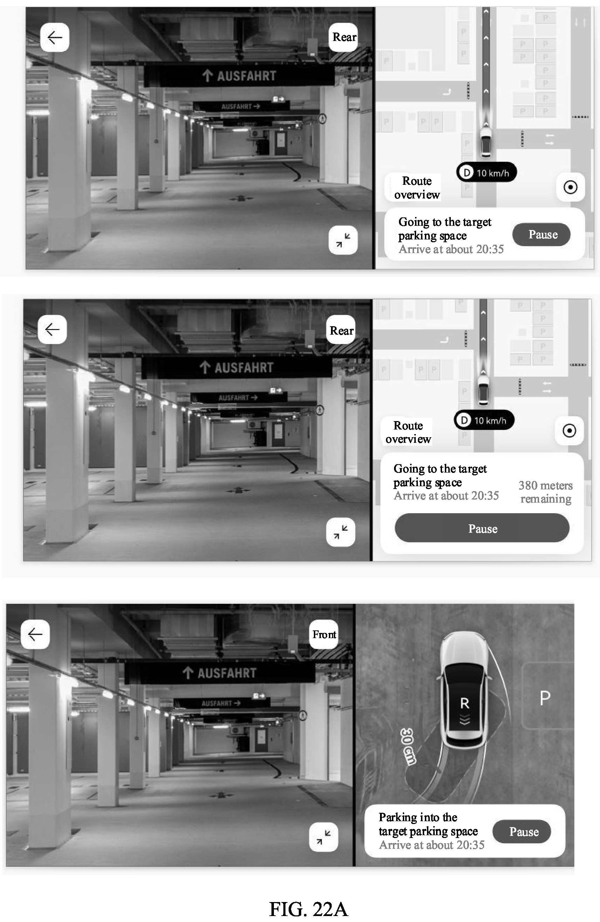

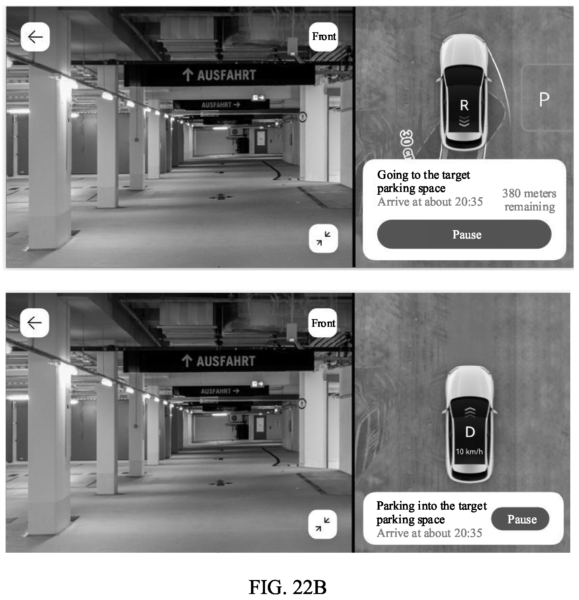

In addition, to increase an observation range of the user, the user may further display the electronic device in landscape mode. For example, as shown in FIG. 22A and FIG. 22B, when it is detected that the electronic device is in landscape mode, the front view of the vehicle may be zoomed in for display, that is, an image captured by an image sensor disposed at the head of the vehicle, which certainly may be replaced with an image captured by another sensor of the vehicle.

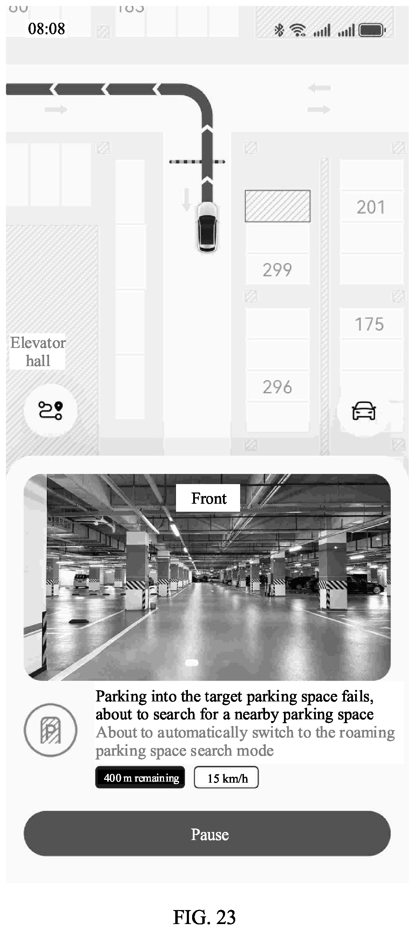

In addition, if parking into the parking space fails, as shown in FIG. 23, an available parking space may be searched for again. For example, the vehicle status may be replaced with "Parking into the target parking space fails, about to search for a nearby parking space", and "About to automatically switch to the roaming parking space search mode" is shown. In addition, in the foregoing valet parking process, if a parking failure occurs, switching to the roaming parking space search mode may be directly performed, or a parking space is specified by the user again.

Therefore, in this implementation of this application, the user may one-click enable valet parking without switching an application, thereby improving user experience. In addition, in a process in which the vehicle performs valet parking, the entire process may be transparent on the display of the electronic device, so that the user can learn of a status of the vehicle in real time, and the vehicle is under control of the user, thereby improving vehicle safety.

### 2. Roaming parking

In a possible implementation, after selecting the roaming parking icon, the user may control the vehicle to implement roaming parking in response to a trigger operation for the roaming parking icon, and display information obtained when the vehicle performs roaming parking, for example, information such as a traveling path of the vehicle, an image captured by the vehicle in real time, a vehicle speed, and a nearby parking space.

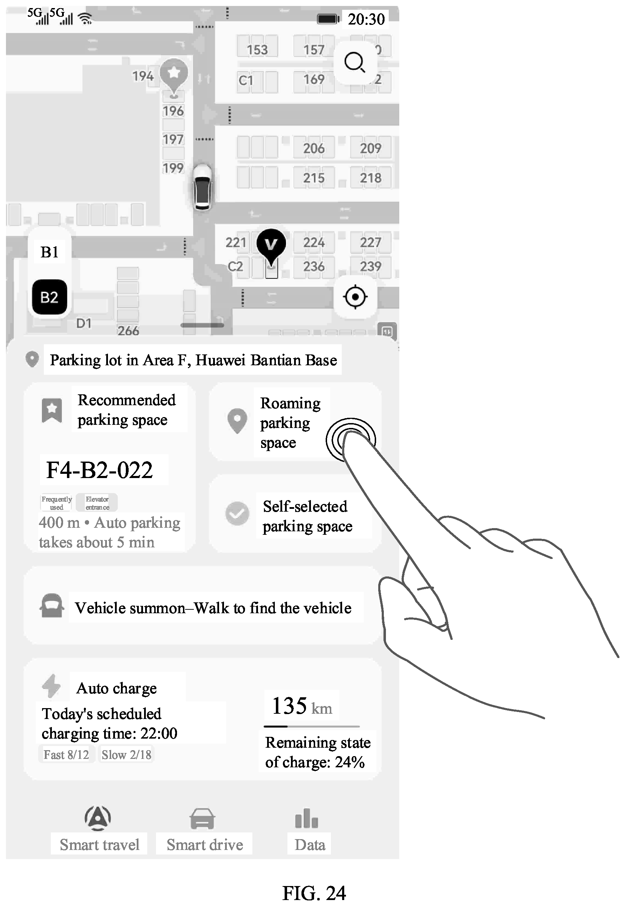

For example, as shown in FIG. 24, the user may select "Roaming parking space" on a home screen, to enable the roaming parking function of the vehicle.

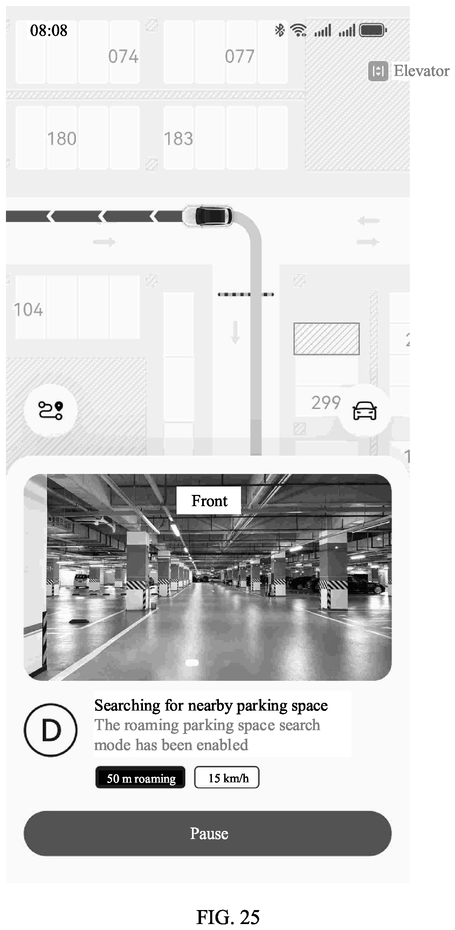

Then, a nearby parking space search mode may be enabled in response to the trigger operation of the user for roaming parking. As shown in FIG. 25, a current status of the vehicle may be displayed in a display interface as "Searching for nearby parking space", and "The roaming parking space search mode has been enabled" is shown. In addition, a real-time image captured by the vehicle, a roaming parking space search distance of the vehicle, a vehicle speed, a traveling path of the vehicle, and the like are synchronously displayed.

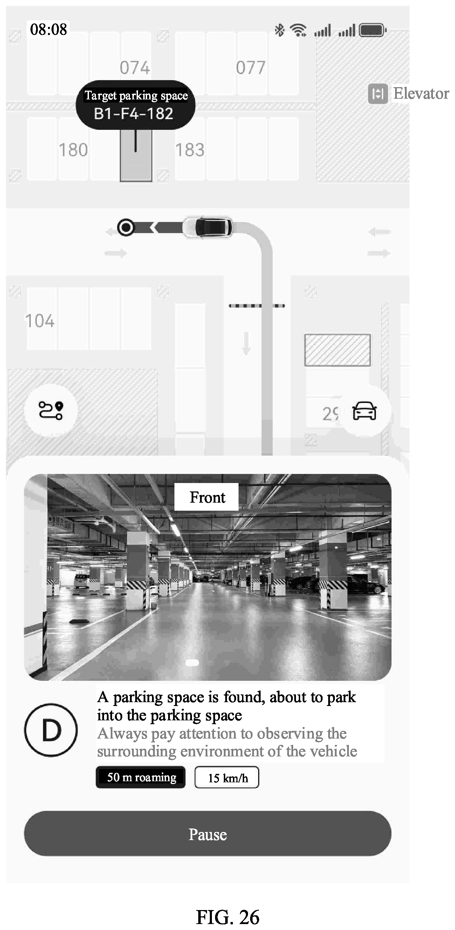

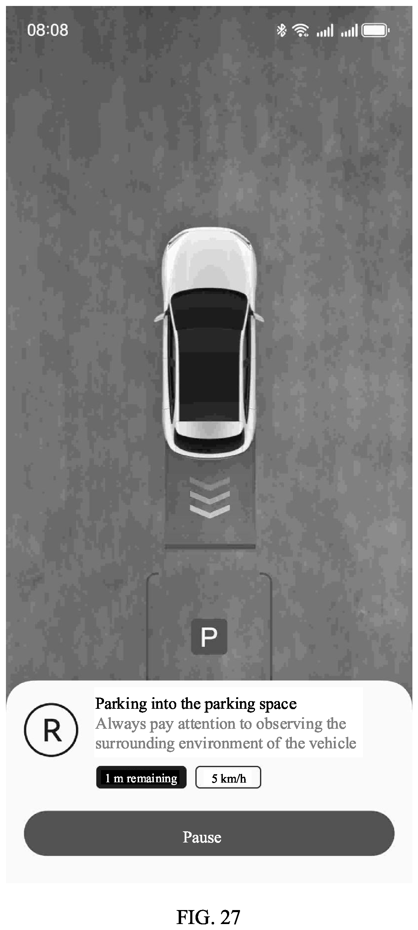

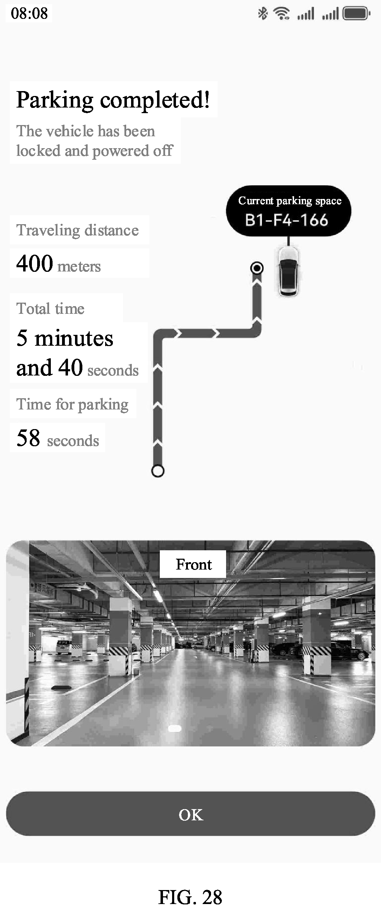

As shown in FIG. 26, when the vehicle finds an available parking space, the status of the vehicle may be replaced with "A parking space is found, about to park into the parking space", and "Always pay attention to observing the surrounding environment of the vehicle" is synchronously shown. Then, as shown in FIG. 27, the vehicle may be parked into the parking space, and the status of the vehicle is synchronously displayed as "Parking into the parking space". After the vehicle is parked into the parking space, parking completion may be indicated, as shown in FIG. 28.

In addition, if parking into the parking space fails, as shown in FIG. 23, an available parking space may be searched for again. For example, the vehicle status may be replaced with "Parking into the target parking space fails, about to search for a nearby parking space", and "About to automatically switch to the roaming parking space search mode" is shown. In addition, in the foregoing valet parking process, if a parking failure occurs, switching to the roaming parking space search mode may be directly performed, or a parking space is specified by the user again.

Therefore, in this implementation of this application, the user can implement one-click roaming parking, thereby improving user experience. In addition, in a roaming parking process of the vehicle, the entire process may be transparent on the electronic device, so that the user can learn of the status of the vehicle in real time.

### 3. Summoning and vehicle finding

Summoning is to summon the vehicle to travel to a summoning point, and vehicle finding is to query a position of the vehicle and generate a walking path to the vehicle.

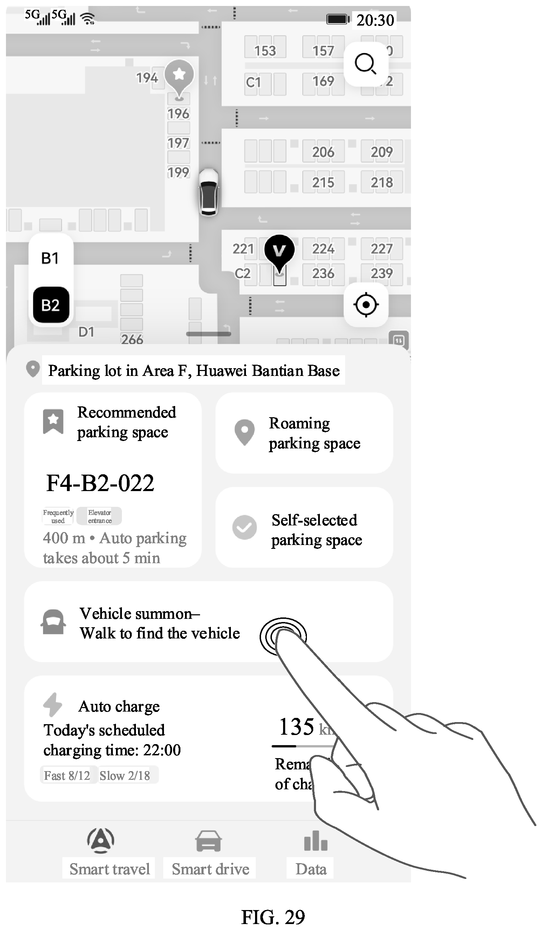

For ease of operation, in this embodiment of this application, entries of the summoning function and the vehicle finding function may be set in a same interface, or certainly, may be separately set as different function entries. For example, as shown in FIG. 29, "Vehicle summon-Walk to find the vehicle" may be displayed on a home screen, to enable the summoning and vehicle finding functions.

After the user selects the summoning icon, in response to a trigger operation of the user for the summoning function, the vehicle may be indicated to travel to a summoning position.

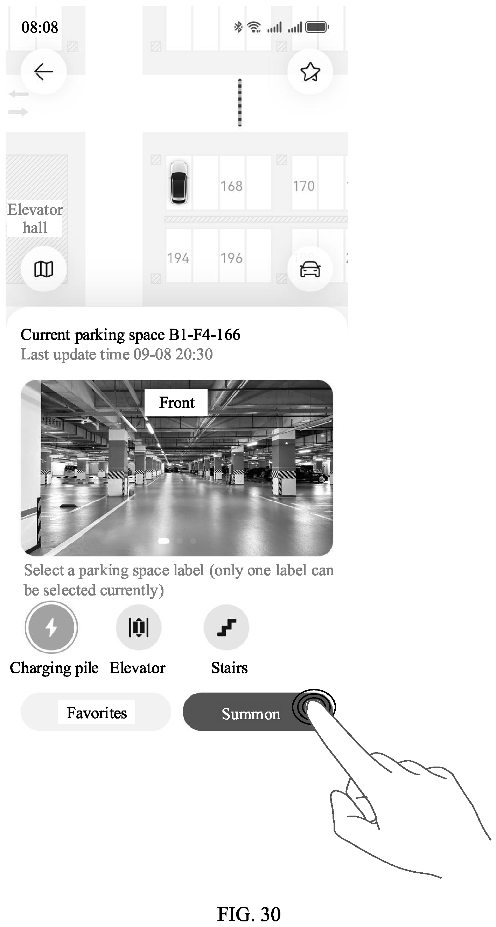

For example, as shown in FIG. 30, when the vehicle is parked in a parking space, position information of the vehicle may be displayed (correspondingly, for a display interface of the parking query function, refer to FIG. 27). The summoning icon may be displayed in a position display interface of the vehicle, and is used to enable the summoning function.

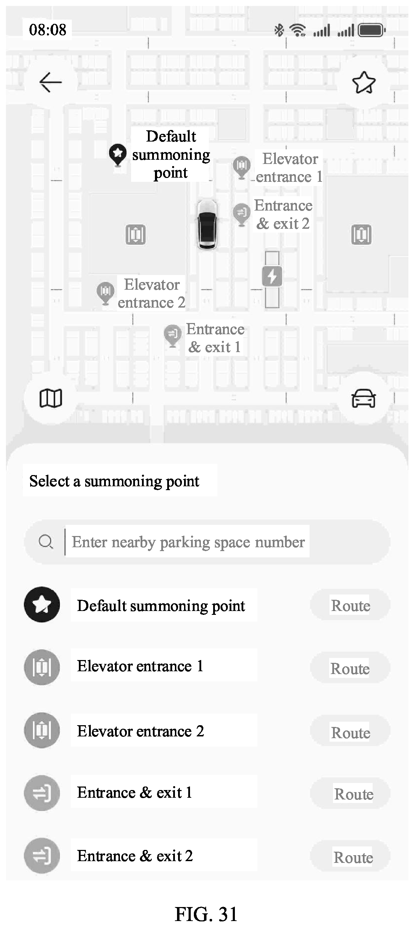

After the user selects the summoning icon to enable the summoning function, a summoning point selection interface may be displayed in response to a trigger operation of the user. The interface may be shown in FIG. 31. The user may select a recommended summoning point or enter a summoning point.

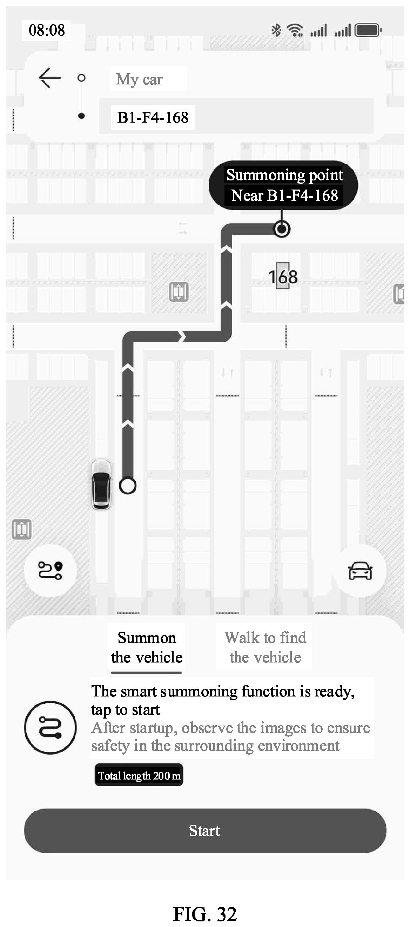

After the summoning point is determined, a path for the vehicle to travel from the position of the vehicle to the summoning point may be generated. As shown in FIG. 32, after the path is generated, a current status of the vehicle may be displayed as "The smart summoning function is ready, tap to start". If the user selects a start button, the summoning function of the vehicle may be enabled.

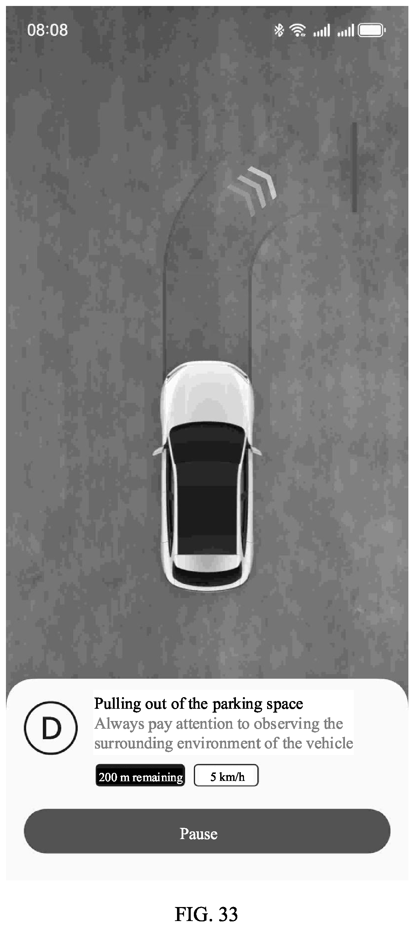

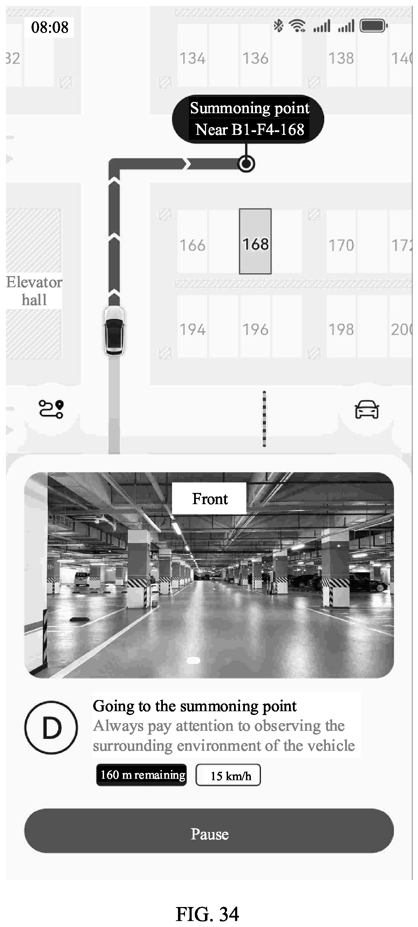

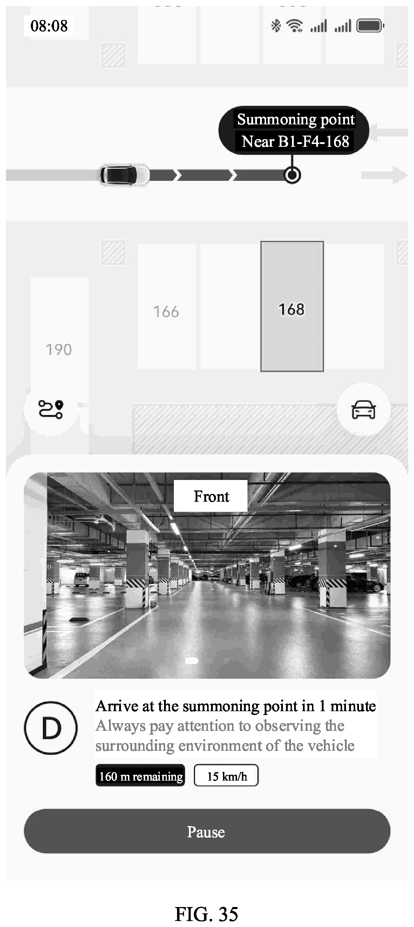

Then, the vehicle may travel to the summoning point. As shown in FIG. 33, FIG. 34, and FIG. 35, the vehicle may synchronize real-time information to the electronic device. For example, when the status is "Parking into the parking space", a real-time position of the vehicle may be synchronously zoomed in and displayed. When the status of the vehicle is "Going to the summoning point" or "Arrive at the summoning point in 1 minute", a real-time image captured by the vehicle sensor may be displayed.

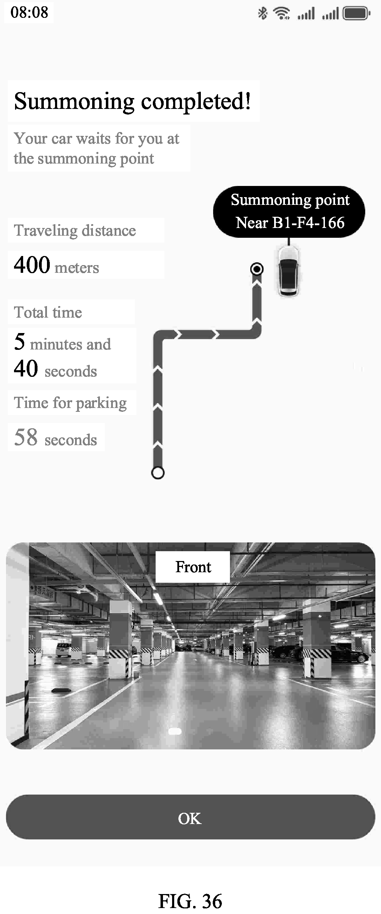

After the vehicle successfully travels to the summoning point, as shown in FIG. 36, a summoning completion interface may be displayed.

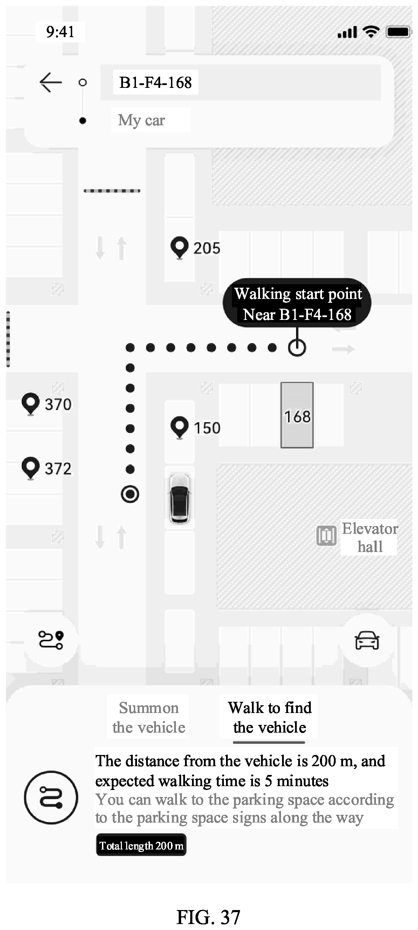

In addition, when vehicle finding is started, a path for walking from the current position of the electronic device to the position of the vehicle may be planned. For example, the vehicle finding function may be the vehicle finding entry shown in FIG. 32. After vehicle finding is started, as shown in FIG. 37, a path for walking from the current position to the position of the vehicle may be displayed. For example, "The distance from the vehicle is 200 m, and expected walking time is 5 minutes" may be further synchronously shown.

Therefore, in this implementation of this application, the vehicle summoning or vehicle finding function may be implemented on a platform that integrates a plurality of functions, so that the summoning and vehicle finding functions can be more conveniently provided for the user. In addition, a status change of the vehicle may be displayed in real time during summoning, so that a vehicle summoning process is transparent.

In addition, when the vehicle implements a function such as valet parking, roaming parking, or summoning, some exceptions may occur, for example, poor communication signal quality, a path planning failure, a complex road condition, or an obstacle, which may cause interruption or termination of the function implemented by the vehicle. The following describes display interfaces of some possible exceptions.

### 1. Poor signal

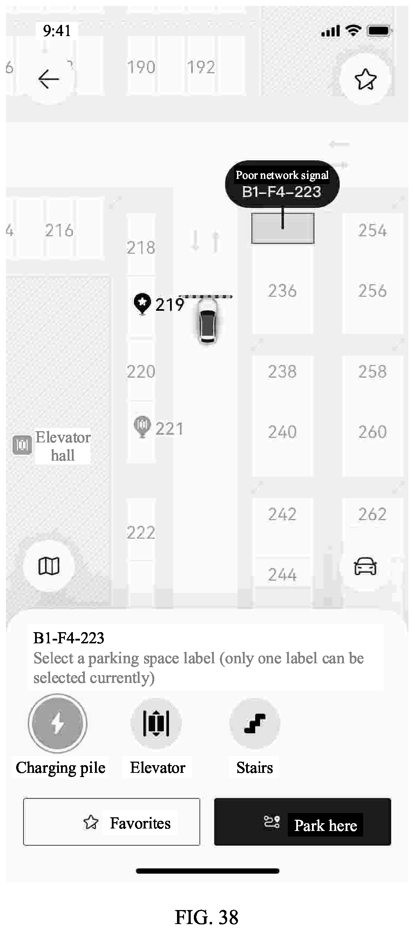

For example, when a valet parking space is selected, as shown in FIG. 38, if a network signal of the selected parking space is poor, the poor network signal of the parking space may be marked in a display interface for the parking space.

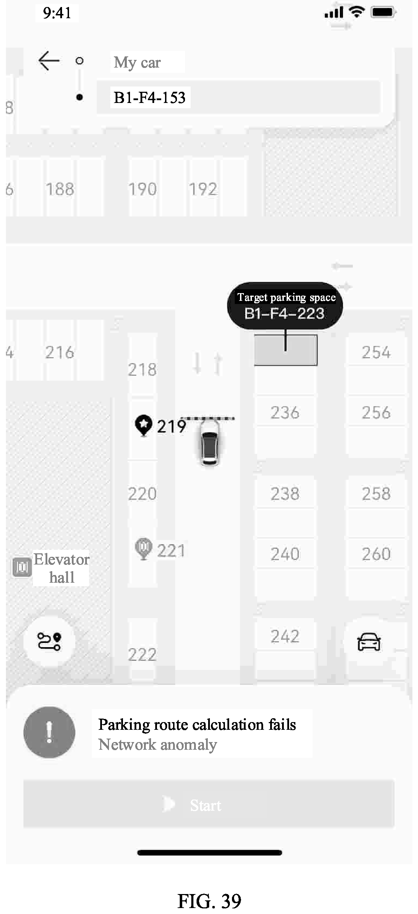

For another example, during parking path planning, if parking path planning fails, as shown in FIG. 39, "Parking route calculation fails", "Network anomaly", and the like may be shown. Subsequently, when the network quality is better, recalculation may be performed or another function may be selected by the user.

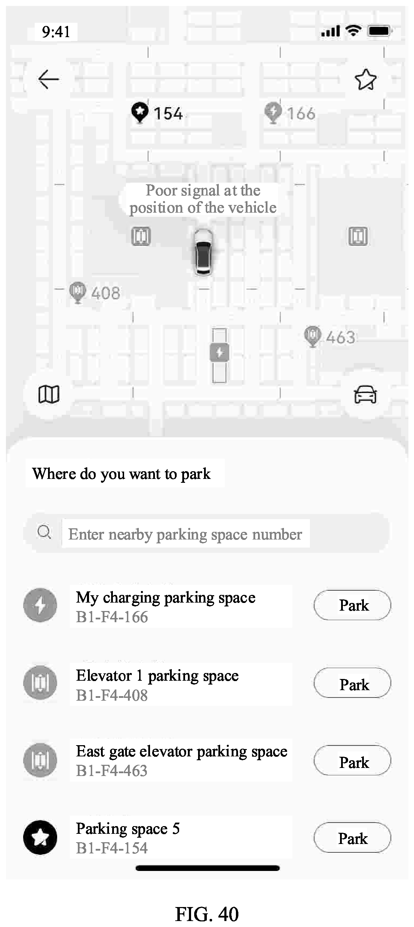

For another example, in a parking space selection interface of valet parking, if a signal at a position of the vehicle is poor, as shown in FIG. 40, "Poor signal at the position of the vehicle" may be highlighted in the display interface for the position of the vehicle. In this case, the user may change a positioning manner of the vehicle, or drive the vehicle to a position with a better signal.

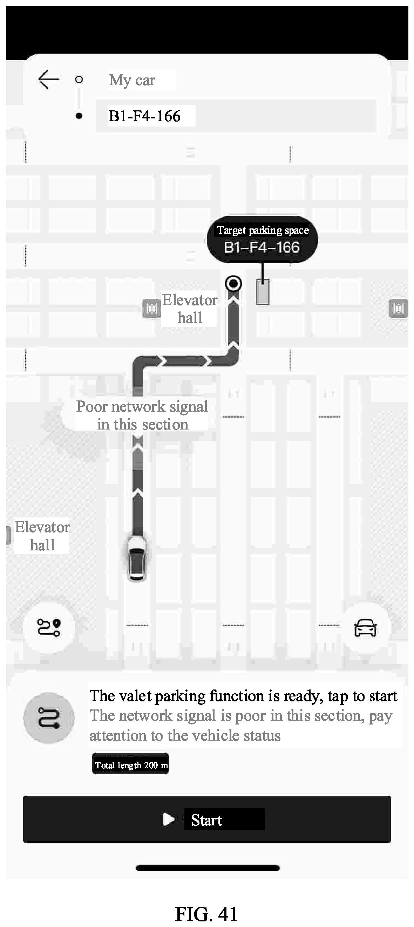

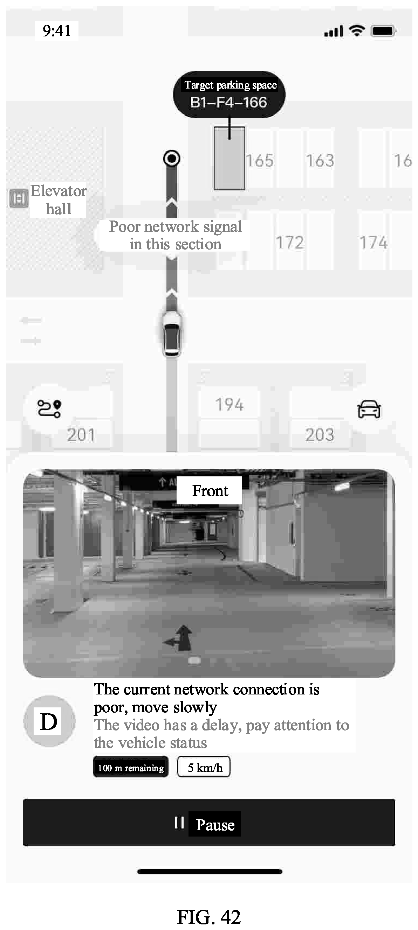

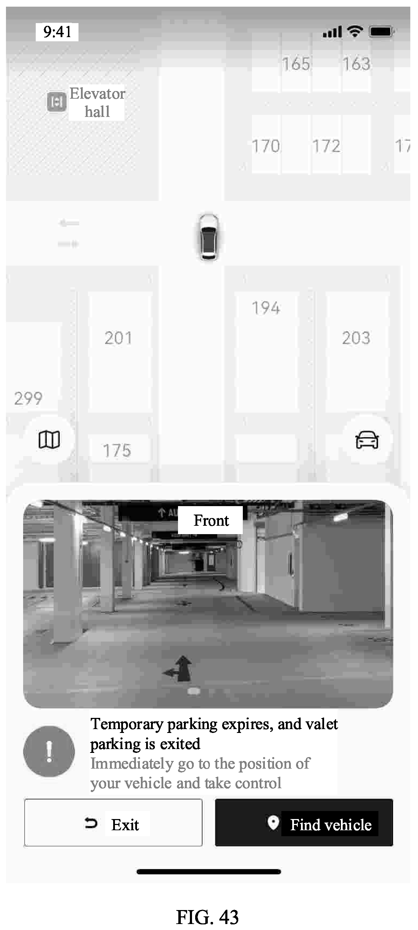

For another example, as shown in FIG. 41, after a valet parking path is planned for the vehicle, if a network signal in a road section is poor, "Poor network signal in this section" may be shown in the road section with a poor network signal in a display interface, and "The network signal is poor in this section, pay attention to the vehicle status" is shown in a function status prompt bar. After valet parking starts, when the vehicle travels to the road section, as shown in FIG. 42, a vehicle speed may be reduced, for example, the vehicle speed is reduced to 5 km/h, and a current status of the vehicle is displayed as "The current network connection is poor, waking up". In addition, "The video has a delay, pay attention to the vehicle status" may be further shown. In addition, if the vehicle stops traveling due to the poor network signal, the vehicle may exit the valet parking function, as shown in FIG. 43, and send an alarm for a current status, for example, an alarm "Temporary parking expires, and valet parking is exited". In addition, "Immediately go to the position of your vehicle and take control" may be further shown.

Therefore, in this implementation of this application, for a scenario in which network signal quality is poor, a status of the vehicle during function execution may be adaptively adjusted, or the function may be interrupted, to improve driving safety of the vehicle.

### 2. Obstacle

In a traveling process of valet parking, roaming parking, or summoning of the vehicle, an obstacle may appear on a road, which affects traveling of the vehicle. In this case, an image or a video captured by the vehicle may be played in real time in a display interface, so as to implement transparent traveling of the vehicle.

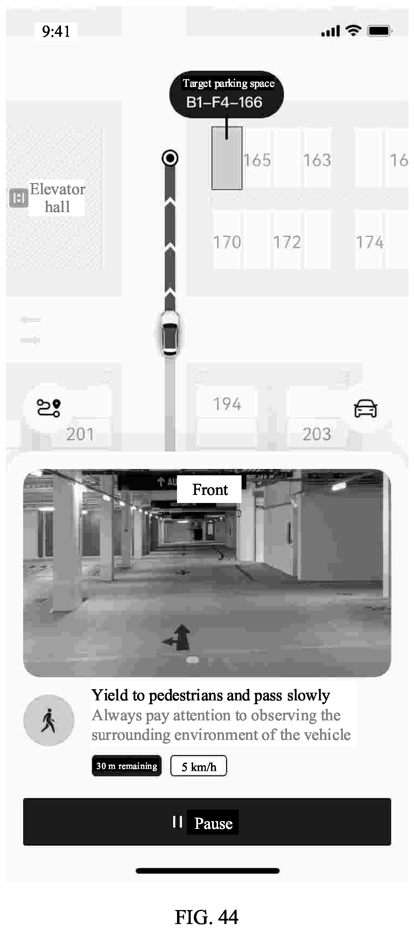

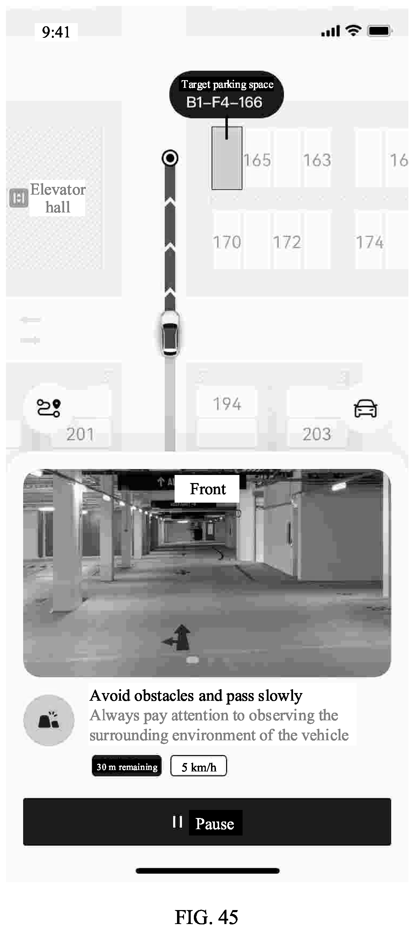

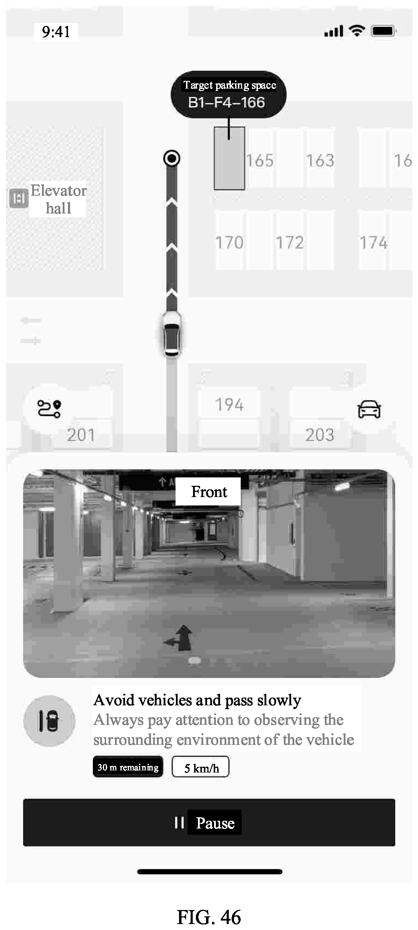

For example, as shown in FIG. 44, when a pedestrian appears on a traveling route of the vehicle, the vehicle may decelerate to yield to the pedestrian. In this case, a status "Yield to pedestrians and pass slowly" during function execution may be displayed in real time in the display interface of the electronic device. In addition, when another obstacle is encountered, for example, a vehicle or an unknown obstacle, as shown in FIG. 45 and FIG. 46, statuses "Avoid vehicles and pass slowly", "Avoid obstacles and pass slowly", and the like during function execution may be displayed in real time in the display interface of the electronic device.

Therefore, in this implementation of this application, in a traveling process of the vehicle, when an obstacle exists on a path, an image may also be synchronized to the electronic device in real time, so that the user can learn of a status of the vehicle in real time, thereby implementing transparency of the vehicle function.

### 3. Complex road condition

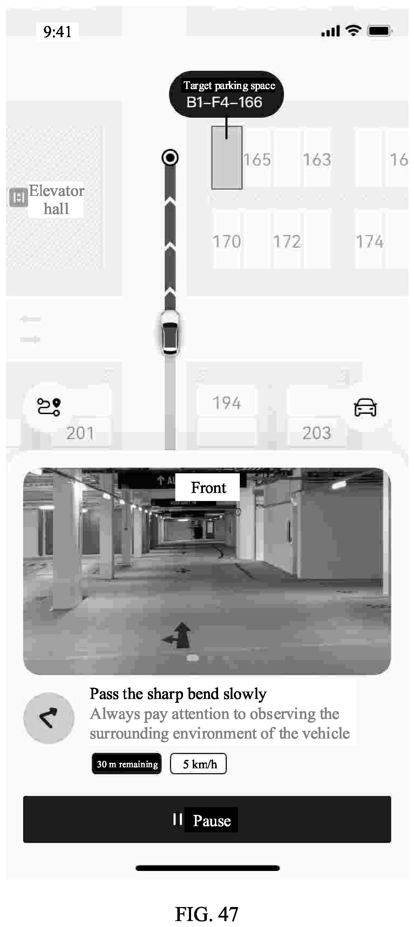

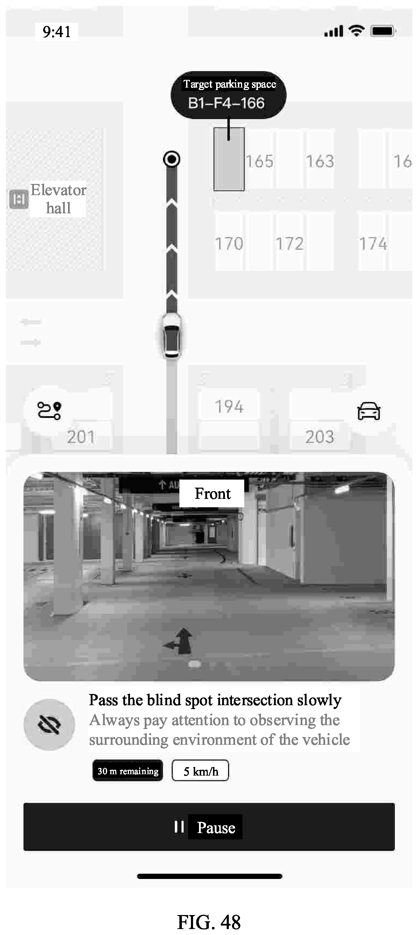

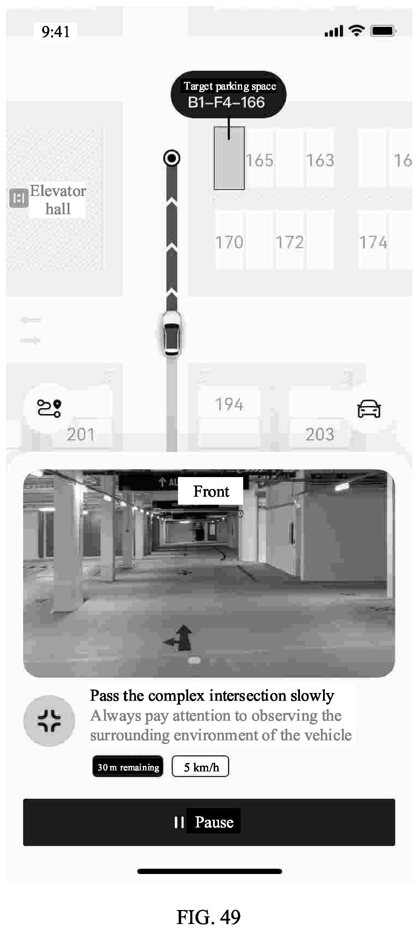

For a complex road condition on a traveling path of the vehicle, for example, a sharp bend, a blind spot intersection, or a complex intersection, an image may also be synchronized to the electronic device. For example, as shown in FIG. 47, FIG. 48, and FIG. 49, statuses during function execution may be separately set to "Pass the sharp bend slowly", "Pass the blind spot intersection slowly", "Pass the complex intersection slowly", or the like.

Therefore, in this implementation of this application, for a complex road condition, a road condition image may also be synchronized to the electronic device, to implement function transparency and improve user experience.

In addition, for scenarios such as valet parking, roaming parking, or summoning of the vehicle, when the vehicle implements functions such as valet parking, roaming parking, or summoning of the vehicle, a traveling path of the vehicle may also be synchronously displayed on a display of the vehicle.

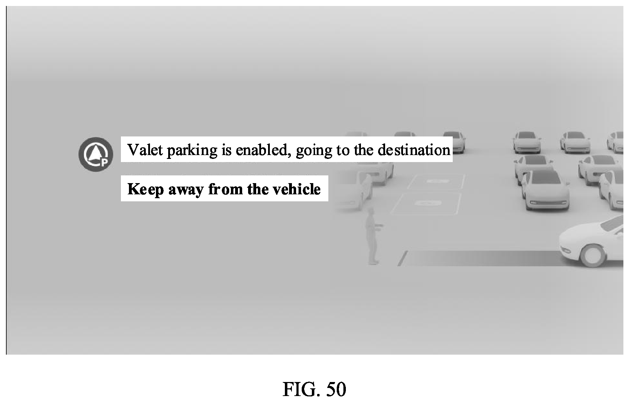

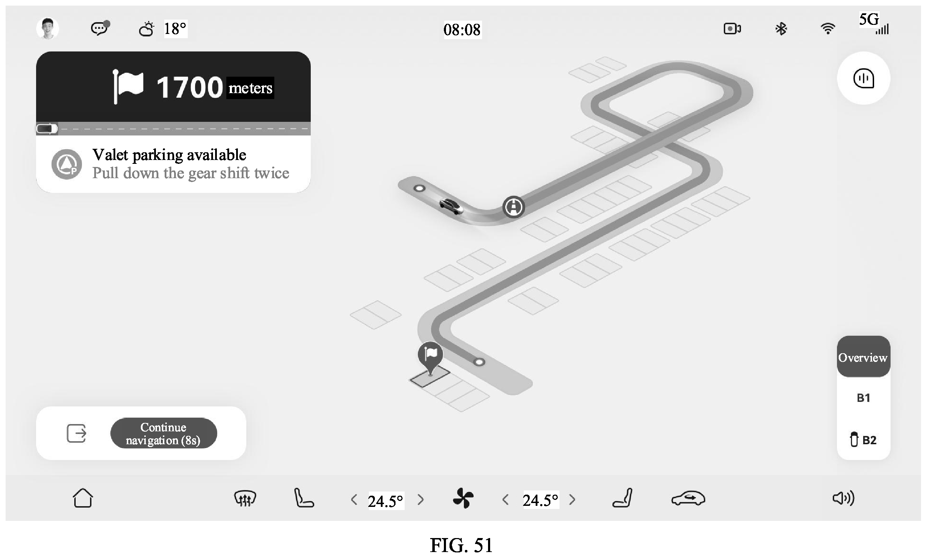

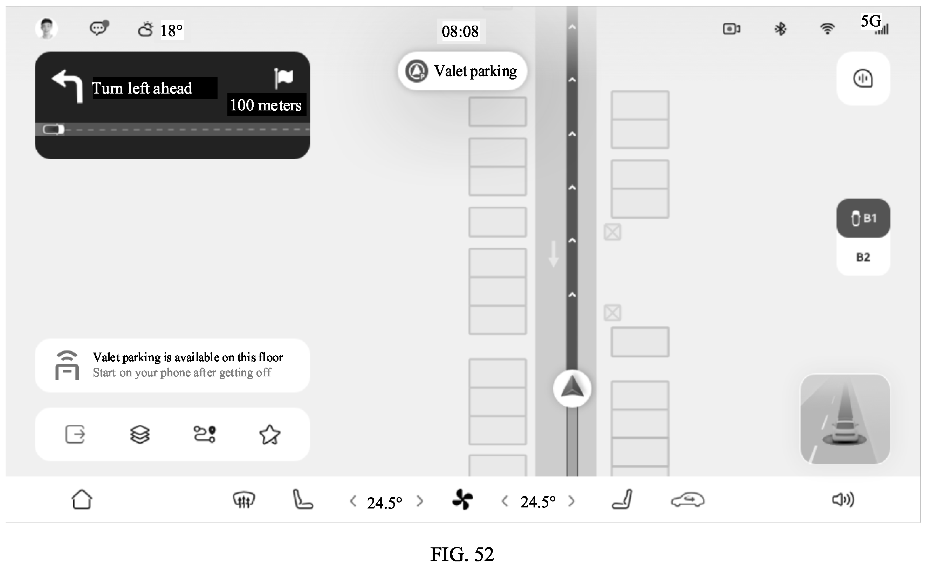

For example, in a valet parking scenario, an initial display interface on the display of the vehicle may be shown in FIG. 50. For example, "Keep away from the vehicle" may be shown in the display interface. Before traveling for parking, as shown in FIG. 51, a parking path may be displayed on the display of the vehicle. During traveling for parking, as shown in FIG. 52, a navigation path of the vehicle and a current position of the vehicle may be zoomed in for display.

Therefore, in this implementation of this application, the navigation path of the vehicle may be further synchronously displayed on the display of the vehicle. When the vehicle further includes a passenger, passenger experience can be improved.

It should be noted that the prompt information or the status information displayed in the GUI or the display interface may be replaced with prompt information or status information text representing a similar meaning. The accompanying drawings of this application are merely an example for description, and are not used as a limitation.

The foregoing describes the method procedure, the electronic device, and the GUI provided in this application. The following further describes a structure of an apparatus provided in this application.

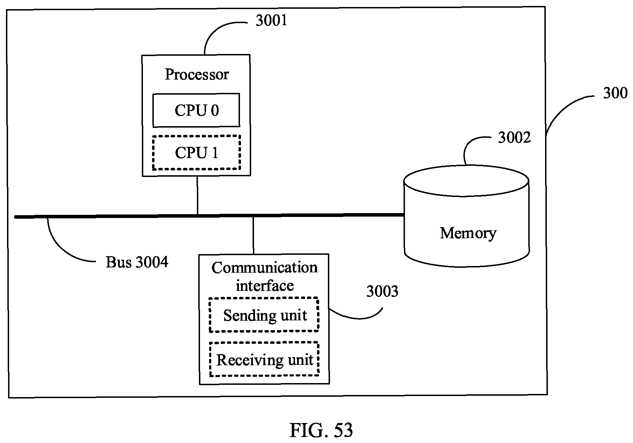

FIG. 53 is a diagram of a hardware structure of a display apparatus 300 according to an embodiment of this application. The display apparatus may be deployed in a vehicle, and may be configured to perform the method steps that are performed by the electronic device or the vehicle and that are shown in FIG. 4 or FIG. 5, or include GUIs corresponding to FIG. 6 to FIG. 52. The display apparatus may also be referred to as an electronic device.

The display apparatus 300 shown in FIG. 53 may include a processor 3001, a memory 3002, a communication interface 3003, and a bus 3004. The processor 3001, the memory 3002, and the communication interface 3003 may be connected by using a bus 3004.

The processor 3001 is a control center of the generation display apparatus 300, and may be a general-purpose central processing unit (central processing unit, CPU), another general-purpose processor, or the like. The general-purpose processor may be a microprocessor, any conventional processor, or the like.

In an example, the processor 3001 may include one or more CPUs, for example, a CPU 0 and a CPU 1 shown in FIG. 53.

The memory 3002 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer. However, this is not limited.

In a possible implementation, the memory 3002 may exist independent of the processor 3001. The memory 3002 may be connected to the processor 3001 through the bus 3004, and is configured to store data, instructions, or program code. When invoking and executing the instructions or the program code stored in the memory 3002, the processor 3001 can implement the display method provided in embodiments of this application or extract the GUI provided in embodiments of this application.

In another possible implementation, the memory 3002 may be alternatively integrated with the processor 3001.

The communication interface 3003 is configured to connect the display apparatus 300 to another device through a communication network. The communication network may be an Ethernet, a radio access network (radio access network, RAN), a wireless local area network (wireless local area network, WLAN), or the like. The communication interface 3003 may include a receiving unit configured to receive data and a sending unit configured to send data.

The bus 3004 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 53, but this does not mean that there is only one bus or only one type of bus.

It should be noted that the structure shown in FIG. 53 does not constitute a limitation on the display apparatus 300. In addition to the components shown in FIG. 53, the display apparatus 300 may include more or fewer components than those shown in the figure, combine some components, or have different component arrangements.

Optionally, the display apparatus shown in FIG. 53 is a chip.

An embodiment of this application further provides a digital processing chip. A circuit and one or more interfaces that are configured to implement the processor 3001 or a function of the processor 3001 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the display apparatus in the foregoing embodiments.

FIG. 53 is a diagram of a hardware structure of a display apparatus 300 according to an embodiment of this application. The display apparatus may be deployed in a vehicle, and may be configured to perform the method steps that are performed by the electronic device or the vehicle and that are shown in FIG. 4 or FIG. 5, or include GUIs corresponding to FIG. 6 to FIG. 52. The display apparatus may also be applied to the foregoing electronic device, or may be applied to the foregoing vehicle.

The display apparatus 300 shown in FIG. 53 may include a processor 3001, a memory 3002, a communication interface 3003, and a bus 3004. The processor 3001, the memory 3002, and the communication interface 3003 may be connected by using a bus 3004.

The processor 3001 is a control center of the generation display apparatus 300, and may be a general-purpose central processing unit (central processing unit, CPU), another general-purpose processor, or the like. The general-purpose processor may be a microprocessor, any conventional processor, or the like.

In an example, the processor 3001 may include one or more CPUs, for example, a CPU 0 and a CPU 1 shown in FIG. 53.

The memory 3002 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer. However, this is not limited.

In a possible implementation, the memory 3002 may exist independent of the processor 3001. The memory 3002 may be connected to the processor 3001 through the bus 3004, and is configured to store data, instructions, or program code. When invoking and executing the instructions or the program code stored in the memory 3002, the processor 3001 can implement the display method provided in embodiments of this application or extract the GUI provided in embodiments of this application.

In another possible implementation, the memory 3002 may be alternatively integrated with the processor 3001.

The communication interface 3003 is configured to connect the display apparatus 300 to another device through a communication network. The communication network may be an Ethernet, a radio access network (radio access network, RAN), a wireless local area network (wireless local area networks, WLAN), or the like. The communication interface 3003 may include a receiving unit configured to receive data and a sending unit configured to send data.

The bus 3004 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 53, but this does not mean that there is only one bus or only one type of bus.

It should be noted that the structure shown in FIG. 53 does not constitute a limitation on the display apparatus 300. In addition to the components shown in FIG. 53, the display apparatus 300 may include more or fewer components than those shown in the figure, combine some components, or have different component arrangements.

Optionally, the display apparatus shown in FIG. 53 is a chip.

An embodiment of this application further provides a digital processing chip. A circuit and one or more interfaces that are configured to implement the processor 3001 or a function of the processor 3001 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the display apparatus in the foregoing embodiments.

An embodiment of this application further provides a computer program product. When the computer program product runs on a computer, the computer is enabled to perform the steps in the methods described in the embodiments shown in FIG. 4 and FIG. 5.

The display apparatus provided in embodiments of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the methods described in the embodiments shown in FIG. 4 and FIG. 5. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or may be any conventional processor or the like. The processing unit or the processor may be configured to perform the steps in the methods corresponding to FIG. 4 and FIG. 5.

An embodiment of this application further provides a vehicle, and the vehicle includes the apparatus shown in FIG. 12 or FIG. 53.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk (solid state disk, SSD)), or the like.

In the specification, claims, and accompanying drawings of this application, the terms "first", "second", "third", "fourth", and the like are intended to distinguish between similar objects but do not necessarily indicate a specific order or sequence. It should be understood that the data used in such a way are interchangeable in appropriate circumstances so that the embodiments described herein can be implemented in other orders than the order illustrated or described herein. In addition, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Finally, it should be noted that the foregoing descriptions are merely specific implementations of this application. However, the protection scope of this application is not limited thereto. Any change or replacement readily figured out by a person skilled in the art within the technical scope disclosed in this application shall fall within the protection scope of this application.

## Claims

1. A display method, comprising:
displaying a vehicle parking and vehicle finding interface in response to a trigger operation for displaying the vehicle parking and vehicle finding interface, wherein the vehicle parking and vehicle finding interface comprises a plurality of icons, the plurality of icons comprise at least one of a valet parking icon, a roaming parking icon, a summoning icon, or a vehicle finding icon, a function corresponding to the valet parking icon indicates a function of starting to park the vehicle into a parking space, the roaming parking icon indicates a function of searching for a parking space by the vehicle, the summoning indicates a function of traveling to a specified position by the vehicle, and the vehicle finding indicates a function of obtaining a path to the vehicle.

2. The method according to claim 1, wherein the method further comprises:
sending control data to the vehicle in response to an operation on a selected icon in the vehicle parking and vehicle finding interface, wherein the control data comprises an instruction for instructing the vehicle to implement a function corresponding to the selected icon; and
displaying a path obtained when the vehicle implements the function corresponding to the selected icon.

3. The method according to claim 2, wherein the method further comprises:
displaying information collected by a sensor in the vehicle when the vehicle implements the function corresponding to the selected icon.

4. The method according to claim 2 or 3, wherein if the selected icon comprises any one of the valet parking icon, the summoning icon, and the vehicle finding icon, displaying the path obtained when the vehicle implements the function corresponding to the selected icon comprises:
obtaining information about a first position;
obtaining at least one path based on the information about the first position, wherein the at least one path comprises a path between the first position and a second position of the vehicle; and
displaying the at least one path.

5. The method according to claim 4, wherein if the selected icon is the valet parking icon, the vehicle parking and vehicle finding interface displays at least one available parking space, and the at least one available parking space is an unoccupied parking space; and
obtaining the information about the first position comprises:
obtaining a position of a selected available parking space in response to an operation on any one of the at least one available parking space, to obtain the information about the first position.

6. The method according to claim 5, wherein the method further comprises:
obtaining data collected by the sensor in the vehicle, and determining the at least one available parking space based on the data collected by the sensor.

7. The method according to any one of claims 3 to 6, wherein sending the control data to the vehicle comprises:
obtaining a first path from the at least one path; and
sending the control data to the vehicle, wherein the control data carries the first path, and the first path indicates the vehicle to travel along the first path to implement the function corresponding to the selected icon.

8. The method according to claim 7, wherein the method is applied to an electronic device, and the method further comprises:
if a position of the vehicle overlaps a position of the electronic device, sending an image displayed on the electronic device to the vehicle, to display the image on a display of the vehicle.

9. The method according to any one of claims 2 to 8, wherein if the selected icon is the roaming parking icon,
the method further comprises:
sending a roaming parking indication to the vehicle, wherein the roaming parking indication indicates the vehicle to search for an available parking space and travel into the available parking space; and
displaying the path obtained when the vehicle implements the function corresponding to the selected icon comprises:
obtaining positioning information of the vehicle traveling to the available parking space, and synchronously displaying the positioning information.

10. The method according to any one of claims 1 to 9, wherein the method further comprises:
obtaining recommendation information based on information currently generated by the vehicle, wherein the recommendation information comprises information recommended to the vehicle;
generating a recommendation card based on the recommendation information; and
displaying the recommendation card, wherein the recommendation card comprises an entry of a function that is of the vehicle and that is recommended to be enabled.

11. The method according to claim 10, wherein obtaining the recommendation information based on the information currently generated by the vehicle comprises:
obtaining information about the vehicle in a historical time segment, wherein the historical time segment is a time segment that is in a historical time period and that corresponds to a current time segment; and
obtaining the recommendation information based on the information in the historical time segment and the information generated by the vehicle in the current time segment.

12. The method according to claim 10 or 11, wherein the recommendation information comprises at least one of the following recommended information:
an exclusive parking space recommendation, a charging parking space recommendation, a roaming vehicle finding function recommendation, a vehicle summoning-related position recommendation, a vehicle finding function recommendation, or a charging pile recommendation.

13. A display method, applied to a vehicle, and comprising:
receiving control data, wherein the control data comprises an instruction for instructing the vehicle to perform at least one of a valet parking function, a roaming parking function, or a summoning function; and
performing the at least one function based on the control data, and displaying a path obtained when the vehicle performs the at least one function.

14. The method according to claim 13, wherein the control data is sent by an electronic device, and the method further comprises:
when a position of the vehicle overlaps a position of the electronic device, receiving an image displayed on the electronic device and displaying the image.

15. An electronic device, wherein the electronic device comprises a display, a memory, and one or more processors, the memory stores code of a graphical user interface of an application, and the one or more processors are configured to execute the code of the graphical user interface (GUI) stored in the memory, to display the graphical user interface on the display; and the graphical user interface comprises:
a vehicle parking and vehicle finding interface is displayed, wherein the vehicle parking and vehicle finding interface comprises a plurality of icons, the vehicle parking and vehicle finding interface comprises a plurality of icons, the plurality of icons comprise at least one of a valet parking icon, a roaming parking icon, a summoning icon, or a vehicle finding icon, a function corresponding to the valet parking icon indicates a function of starting to park the vehicle into a parking space, the roaming parking icon indicates a function of searching for a parking space by the vehicle, the summoning indicates a function of traveling to a specified position by the vehicle, the vehicle finding indicates a function of obtaining a path to the vehicle, and the parking query indicates a function of querying a position of the vehicle.

16. The electronic device according to claim 15, wherein the graphical user interface comprises:
in response to an operation on a selected icon in the vehicle parking and vehicle finding interface, a path obtained when a function corresponding to the selected icon is implemented is displayed.

17. The electronic device according to claim 16, wherein the graphical user interface further comprises:
information collected by a sensor in the vehicle when the function corresponding to the selected icon is implemented is displayed.

18. The electronic device according to claim 15 or 16, wherein the graphical user interface comprises:
if the selected icon is the valet parking icon or the summoning icon, a path for the vehicle to travel to the first position is displayed; or
if the selected icon comprises the vehicle finding icon or the parking query icon, a path from the first position to the position of the vehicle is displayed.

19. The electronic device according to claim 18, wherein the graphical user interface further comprises:
if the selected icon is the valet parking icon, the vehicle parking and vehicle finding interface further displays at least one available parking space, and the at least one available parking space is an unoccupied parking space; and
in response to an operation on any one of the at least one available parking space, a path for parking the vehicle into a selected parking space is displayed.

20. The electronic device according to any one of claims 15 to 19, wherein the graphical user interface further comprises:
if the selected icon is the roaming parking icon, positioning information of the vehicle traveling to an available parking space is displayed.

21. The electronic device according to any one of claims 15 to 20, wherein the graphical user interface further comprises:
a recommendation card is displayed, wherein the recommendation card comprises recommendation information obtained based on information currently generated by the vehicle, and the recommendation information comprises a function that is of the vehicle and that is recommended to be enabled.

22. The electronic device according to any one of claims 15 to 20, wherein the recommendation information comprises at least one of the following recommended information:
an exclusive parking space recommendation, a charging parking space recommendation, a roaming vehicle finding function recommendation, a vehicle summoning-related position recommendation, a vehicle finding function recommendation, or a charging pile recommendation.

23. An electronic device, comprising a processor, wherein the processor is coupled to a memory, the memory stores a program, and when program instructions stored in the memory are executed by the processor, the method according to any one of claims 1 to 12 is implemented.

24. A vehicle, comprising a processor, wherein the processor is coupled to a memory, the memory stores a program, and when program instructions stored in the memory are executed by the processor, the method according to claim 13 or 14 is implemented.

25. An interaction system, comprising an electronic device and a vehicle, wherein the electronic device is configured to implement the method according to any one of claims 1 to 12, and the vehicle is configured to implement the method according to claim 13 or 14.

26. A computer-readable storage medium, comprising a program, wherein when the program is executed by a processing unit, the method according to any one of claims 1 to 12 or claim 13 or 14 is performed.

27. A computer program product, comprising a computer program or instructions, wherein when the computer program or the instructions are executed by a processor, the method according to any one of claims 1 to 12 or claim 13 or 14 is implemented.
